# FASCICULE DE BREVET EUROPEEN

(11) **EP 3 548 169 B1**
(45) Date de publication et mention de la délivrance du brevet: **13.01.2021**
(21) Numéro de dépôt: 17804590.2
(22) Date de dépôt: 30.11.2017
(51) Int. Cl.: B01J 19/12, B01J 13/02, B22F 1/00, C23C 16/44, H01M 4/134

(54) **DISPOSITIF POUR LA SYNTHESE DE NANOPARTICULES DE TYPE COEUR-COQUILLE PAR PYROLYSE LASER ET PROCEDE ASSOCIE**
VORRICHTUNG ZUR SYNTHESE VON KERN-SCHALE-NANOPARTIKELN DURCH LASERPYROLYSE UND ZUGEHÖRIGES VERFAHREN
DEVICE FOR SYNTHESISING CORE/SHELL TYPE NANOPARTICLES BY LASER PYROLYSIS AND ASSOCIATED METHOD

(30) Priorité: 30.11.2016 FR 1661759
(43) Date de publication de la demande: 09.10.2019
(73) Titulaire: Commissariat à l'Énergie Atomique et aux Énergies Alternatives, 75015 Paris (FR)
(72) Inventeur: HERLIN, Nathalie, 91400 Orsay (FR); BOISMAIN, Florent, 91400 Orsay (FR); ALPER, John, 38100 Grenoble (FR)
(74) Mandataire: Gevers & Orès
(86) Numéro de dépôt international: PCT/EP2017/081044
(87) Numéro de publication internationale: WO 2018/100094

(56) Documents cités:
- WO-A1-2010/005035
- FR-A1- 2 998 485
- MÉLINON PATRICE ET AL: "Engineered inorganic core/shell nanoparticles", PHYSICS REPORTS, NORTH-HOLLAND, AMSTERDAM, NL, vol. 543, no. 3, 14 juin 2014 (2014-06-14) , pages 163-197, XP029067160, ISSN: 0370-1573, DOI: 10.1016/J.PHYSREP.2014.05.003

## Description

La présente invention concerne un dispositif et un procédé de synthèse de nanoparticules de type cœur-coquille par pyrolyse laser.

Par nanoparticules, on entend des particules dont les dimensions sont inférieures au micron.

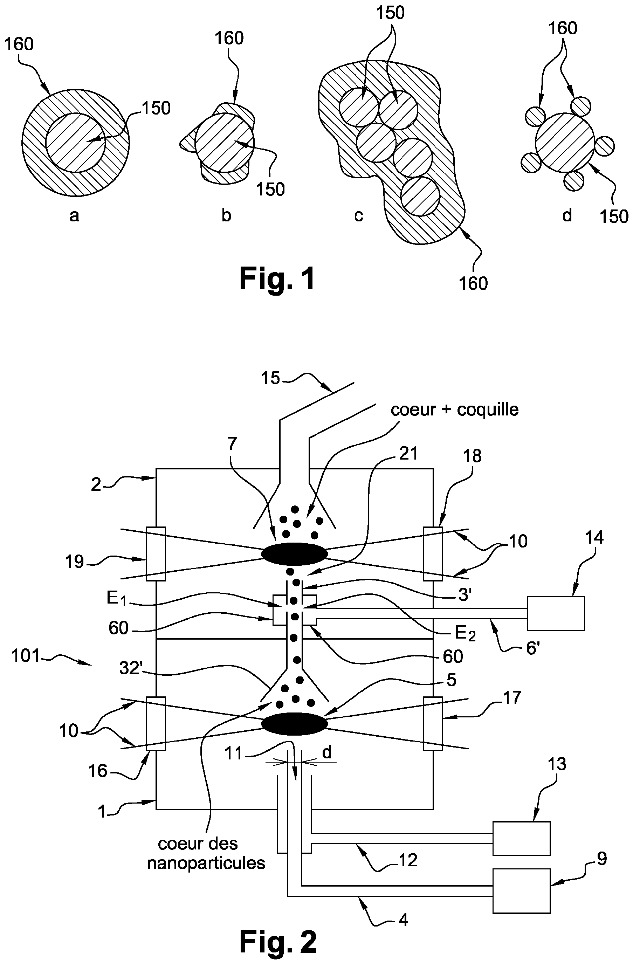

Les nanoparticules de type cœur-coquille sont formées d'un cœur enrobé par une coquille. Cet enrobage peut être intégral ou partiel comme le montre les différents schémas a, b, c et d de la figure 1. Sur ces schémas, le cœur est référencé 150 et la coquille 160.

La pyrolyse laser est largement employée pour synthétiser les nanoparticules de type cœur-coquille.

Un exemple de dispositif employé est proposé dans le document FR 2 998 485 (D1).

Le document D1 propose plus précisément un dispositif de synthèse de nanoparticules de type cœur-coquille par pyrolyse laser, comprenant :
- un réacteur comportant :
   - une première chambre pour la synthèse du cœur, laquelle est munie d'une entrée pour un précurseur du cœur ;
   - une deuxième chambre pour la synthèse de la coquille, laquelle est munie d'une entrée pour un précurseur de la coquille ; et
   - au moins un cana! de communication entre les deux chambres pour transmettre le cœur des nanoparticules destinées à être formées dans la première chambre en direction de la deuxième chambre;
- un dispositif optique pour éclairer chacune des deux chambres, ce dispositif comportant au moins un laser apte à émettre un faisceau laser destiné à interagir avec lesdits précurseurs afin de former le cœur et la coquille.

On peut ainsi synthétiser des nanoparticules de type cœur-coquille en continu pour une gamme étendue de matériaux formant le cœur et la coquille et même quelle que soit la nature chimique des matériaux formant le cœur et la coquille.

Ceci est particulièrement intéressant.

Cependant, une fois le cœur d'une nanoparticule formé, il est important de pouvoir s'assurer de former une coquille autour du cœur. Par exemple, sur le mode de réalisation de la figure 4 du document D1, la configuration du dispositif implique que le précurseur de la coquille arrive, avant la zone d'interaction avec le faisceau laser, autour du cœur préalablement formé. Cela n'assure pas un mélange optimal entre le précurseur de la coquille et les nanoparticules préalablement formées, destinées à former le cœur des nanoparticules cœur-coquille.

Un objectif de l'invention est de proposer une solution permettant de mieux s'assurer de former une coquille autour d'un cœur.

Pour atteindre cet objectif, l'invention propose un dispositif de synthèse de nanoparticules de type cœur-coquille par pyrolyse laser comprenant :
- un réacteur comportant :
   - une première chambre pour la synthèse du cœur, laquelle est munie d'une entrée pour un précurseur du cœur ;
   - une deuxième chambre pour la synthèse de la coquille, laquelle est munie d'une entrée pour un précurseur de la coquille ; et
   - au moins un canal de communication entre les deux chambres pour transmettre le cœur des nanoparticules destinées à être formées dans la première chambre en direction de la deuxième chambre ;
- un dispositif optique pour éclairer chacune des deux chambres, ce dispositif comportant au moins un laser apte à émettre un faisceau laser destiné à interagir avec lesdits précurseurs afin de former le cœur et la coquille ;
   caractérisé en ce qu'il comprend au moins un canal d'amenée du précurseur de la coquille dont une extrémité se présente sous la forme d'une chambre de distribution située dans la deuxième chambre et entourant le canal de communication entre les deux chambres du réacteur, ladite chambre de distribution étant par ailleurs munie, sur sa périphérie interne, d'au moins une ouverture débouchant à l'intérieur dudit canal de communication.

Le dispositif selon l'invention pourra également comprendre les caractéristiques suivantes, prises seules ou en combinaison :
- ladite chambre de distribution comprend, sur sa périphérie interne, au moins deux ouvertures débouchant à l'intérieur dudit canal de communication entre les deux chambres du réacteur ;
- ladite chambre de distribution comprend, sur sa périphérie interne, entre deux et seize ouvertures débouchant à l'intérieur dudit canal de communication entre les deux chambres du réacteur ;
- les ouvertures de la chambre de distribution sont équiréparties sur la périphérie interne de ladite chambre de distribution ;
- les ouvertures de la chambre de distribution sont identiques ;
- la ou chaque ouverture de la chambre de distribution présente une plus grande dimension comprise entre 0,1mm et 5mm, de préférence entre 0,5mm et 3mm ;
- le dispositif optique comprend une pluralité de miroirs agencés de sorte que le faisceau laser émis par le laser soit apte à éclairer successivement les deux chambres du réacteur ;
- le dispositif optique comprend au moins une lame séparatrice pour régler la puissance du faisceau laser dans chacune des deux chambres du réacteur, cette lame séparatrice étant par exemple située entre deux miroirs ;
- le dispositif optique comprend une lame séparatrice et au moins un miroir agencés de sorte que le faisceau laser émis par le laser soit divisé en deux faisceaux chacun apte à éclairer l'une des deux chambres du réacteur ;
- le dispositif optique comprend un premier laser pour éclairer la première chambre du réacteur et un deuxième laser pour éclairer la deuxième chambre du réacteur ;
- le dispositif optique comprend au moins un moyen de focalisation disposé entre le ou chaque laser et au moins l'une des deux chambres du réacteur ;
- la distance entre ledit au moins un moyen de focalisation et la chambre de réacteur avoisinante est réglable ;
- le moyen de focalisation comportant deux lentilles cylindriques, la distance entre les deux lentilles cylindriques est réglable.

L'invention concerne également un procédé de synthèse de nanoparticules de type cœur-coquille par pyrolyse laser, comprenant les étapes suivantes
(a) injecter un précurseur du cœur dans une première chambre d'un réacteur;
(b) éclairer le précurseur du cœur par un faisceau laser afin de former par pyrolyse le cœur des nanoparticules ;
(c) transporter le cœur des nanoparticules ainsi formé à l'étape (b) dans une deuxième chambre du réacteur communiquant avec la première chambre au moyen d'un canal de communication entre les deux chambres ;
(d) injecter un précurseur de la coquille dans la deuxième chambre du réacteur ;
(e) éclairer le précurseur de la coquille avec un faisceau laser afin de former par pyrolyse la coquille des nanoparticules et d'assurer le dépôt de cette coquille autour du cœur ;
caractérisé en ce que l'étape (d) s'effectue par l'intermédiaire d'une chambre de distribution située dans la deuxième chambre et entourant ledit canal de communication entre les deux chambres, ladite chambre de distribution étant par ailleurs munie, sur sa périphérie interne, d'au moins une ouverture débouchant à l'intérieur dudit canal de communication, de sorte que la vitesse moyenne du précurseur dans ladite au moins une ouverture est comprise entre 0,5 m/s et 20 m/s, de préférence entre 2 m/s et 12 m/s.

Le procédé selon l'invention pourra comprendre l'une au moins des caractéristiques suivantes, prises seules ou en combinaison :
- ladite chambre de distribution comprend, sur sa périphérie interne, au moins deux ouvertures débouchant à l'intérieur dudit canal de communication entre les deux chambres du réacteur ;
- les ouvertures de la chambre de distribution sont équiréparties sur la périphérie interne de ladite chambre de distribution ;
- les ouvertures de la chambre de distribution sont identiques ;
- la vitesse moyenne du précurseur dans chaque ouverture est comprise entre 0,5 m/s et 20 m/s, de préférence entre 2 m/s et 12 m/s

D'autres caractéristiques, buts et avantages de l'invention seront énoncés dans la description détaillée ci-après faite en référence aux figures suivantes :
- la figure 2 est un schéma représentant un réacteur du dispositif selon l'invention ;
- les figures 3(a) à 3(d) représentent plusieurs variantes d'un dispositif selon l'invention, chaque variante se distinguant l'une de l'autre par le dispositif optique utilisé avec le réacteur représenté sur la figure 1 ;
- la figure 4, qui comprend les figures 4(a) et 4(b), est une vue agrandie du réacteur de la figure 2 au niveau de l'interface entre une conduite d'amenée des précurseurs de la coquille et un canal de communication entre les deux chambres du réacteur, respectivement selon une première vue en coupe et une deuxième vue en coupe ;
- la figure 5, qui comprend les figures 5(a) et 5(b), est une variante de réalisation de la figure 4, illustrée respectivement selon une première vue en coupe et une deuxième vue en coupe ;
- la figure 6, qui comprend les figures 6(a) et 6(b) est une autre variante de la réalisation de la figure 4, illustrée respectivement selon une première vue en coupe et une deuxième vue en coupe ;
- la figure 7, qui comprend les figures 7(a) et 7(b), est une autre variante de réalisation de la figure 4, illustrée respectivement selon une première vue en coupe et une deuxième vue en coupe ;
- la figure 8 fournit des résultats d'une analyse (spectroscopie Raman) d'un essai expérimental réalisé avec le dispositif selon l'invention, dans sa configuration de la figure 5 ;
- la figure 9, qui comprend les figures 9(a) à 9(c), représente des résultats de simulation numérique obtenus avec le dispositif selon l'invention, dans sa configuration de la figure 5 ;
- la figure 10 représente un autre résultat de simulation numérique obtenu avec le dispositif selon l'invention, dans sa configuration de la figure 5 ;
- la figure 11 représente encore un autre résultat de simulation numérique obtenu avec le dispositif selon l'invention, dans sa configuration de la figure 5 ;
- la figure 12, qui comprend les figures 12(a) et 12(b), est une variante de réalisation de la figure 5, illustrée respectivement selon une première vue en coupe et une deuxième vue en coupe ;
- la figure 13, qui comprend les figures 13(a) à 13(c), représente des résultats de simulation numérique obtenus avec le dispositif selon l'invention, dans sa configuration de la figure 12.

Sur la figure 2, le réacteur 100 comprend une première chambre 1, une deuxième chambre 2 et un canal de communication 3' entre les deux chambres 1, 2. Avantageusement, le canal de communication 3' comprend une partie inférieure 32', logée dans la première chambre 1, qui se présente sous la forme d'un cône pour améliorer la récupération du cœur des nanoparticules.

Dans le cas d'espèce, le réacteur 100 est disposé verticalement, si bien que la deuxième chambre 2 se situe au-dessus de la première chambre 1. Néanmoins, le réacteur 100 représenté sur la figure 2 pourrait tout à fait être installé autrement, et notamment verticalement de sorte que la deuxième chambre 2 se situe au-dessous de la première chambre 1.

La première chambre 1 est munie d'une entrée 11 pour un précurseur du cœur. L'entrée 11 se présentera généralement sous la forme d'une buse d'injection.

La deuxième chambre 2 est également munie d'une entrée 21. Cette entrée 21 se confond avec la sortie du canal 3' de communication entre les deux chambres 1, 2 du réacteur 100.

Le réacteur 100 comprend au moins un canal d'amenée 6' du précurseur de la coquille vers la deuxième chambre 2.

Plus précisément, ledit au moins un canal d'amenée 6' présente une extrémité reliée à une source 14 pour ce précurseur et une autre extrémité, se présentant sous la forme d'une chambre 60 appelée chambre de distribution entourant le canal 3' de communication entre les deux chambres 1,2.

La chambre 60 comprend, sur sa périphérie interne PI, au moins une ouverture et avantageusement, comme représenté sur la figure 2, au moins deux ouvertures E₁, E₂, ..., E_{N}, avec N un nombre entier positif, débouchant à l'intérieur du canal 3' de communication entre les deux chambres 1, 2 du réacteur. Ces ouvertures permettent donc de faire passer le précurseur de la coquille vers le canal 3', ce dernier pouvant ensuite les véhiculer vers l'entrée 21 de la deuxième chambre 2 du réacteur 100. Prévoir plusieurs ouvertures est avantageux dans la mesure où cela permet d'avoir une distribution plus homogène du précurseur dans le canal 3'.

Plusieurs canaux d'amenée pour le précurseur de la coquille peuvent être envisagés, la figure 2 présentant le cas où un seul canal d'amenée 6' est envisagé. On notera que si plusieurs canaux d'amenée du précurseur de la coquille sont prévus, la chambre 60 de distribution peut être commune à l'ensemble des canaux d'amenée. Et si plusieurs canaux d'amenée du précurseur de la coquille sont prévus, on peut prévoir une chambre pour chaque canal d'amenée.

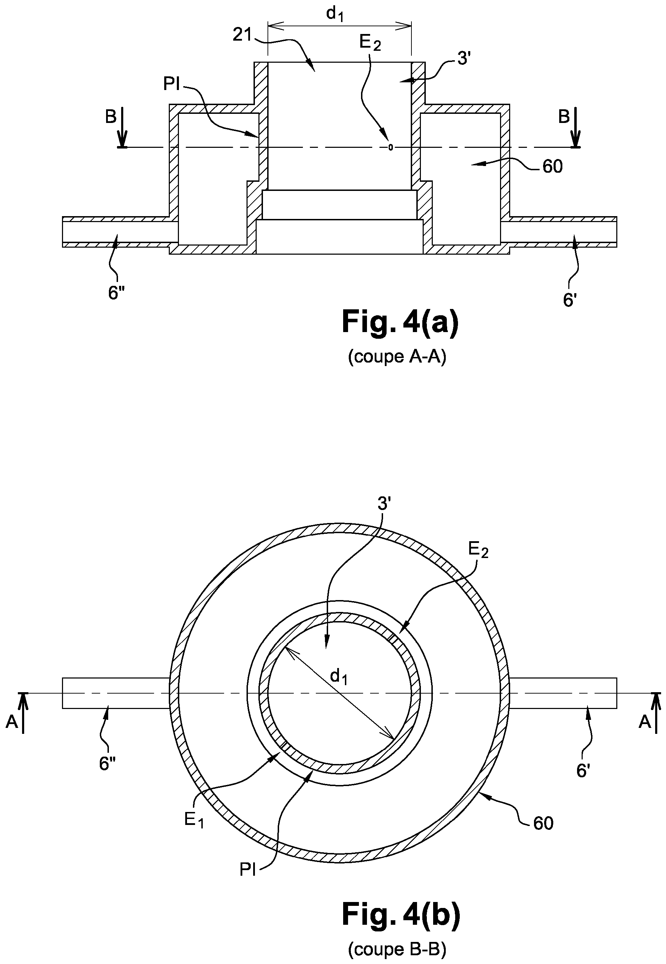

Tout ceci sera expliqué de façon plus détaillé dans la suite de la description à l'appui des figures 4 à 7.

La première chambre 1 est donc dédiée à la synthèse du cœur et la deuxième chambre 2 à la synthèse de la coquille et à la formation définitive des nanoparticules de type coeur-coquille.

Le mélange entre le précurseur de la coquille et le cœur des nanoparticules s'effectue donc au niveau de la deuxième chambre 2 elle-même. On comprend donc incidemment que la chambre de distribution 60 est située dans la deuxième chambre 2. Ce mélange s'effectue par ailleurs avant la zone d'interaction 7 avec le faisceau laser 10, donc plus précisément et notamment au sein du canal 3' entre les ouvertures E₁, E₂, ..., E_{N} et l'entrée 21 de la deuxième chambre 2.

La synthèse du cœur et de la coquille s'effectue donc successivement dans le temps et dans l'espace. Pour autant, la production des nanoparticules s'effectue bien en continu en alimentant chaque entrée 11 d'une part et E₁, E₂, ..., E_{N} d'autre part en flux continu par un précurseur dédié, selon le cas, à la synthèse du cœur ou à la synthèse de la coquille.

L'entrée 11 de la première chambre 1 est reliée à un canal d'amenée 4 du précurseur du cœur, ce canal 4 étant relié à une source 9 pour le précurseur du cœur.

Un gaz neutre est amené dans la première chambre 1 par un conduit 12 dont une partie entoure le canal 4, ledit conduit 12 étant par ailleurs relié à une source 13 de ce gaz.

Ce gaz neutre sert principalement au confinement de la zone d'interaction. Ceci permet d'éviter tout contact entre le précurseur et les parois de la chambre, limitant ainsi les risques de réaction chimique avec les précurseurs du silicium du cœur et/ou de la coquille. Ce gaz neutre évite également toute oxydation du cœur une fois formé avec l'air environnant.

Grâce à ce confinement, on limite encore plus, voire on évite, toute pollution du cœur. Le cœur garde ainsi son intégrité chimique, sans formation d'oxydes ou d'autres composés chimiques.

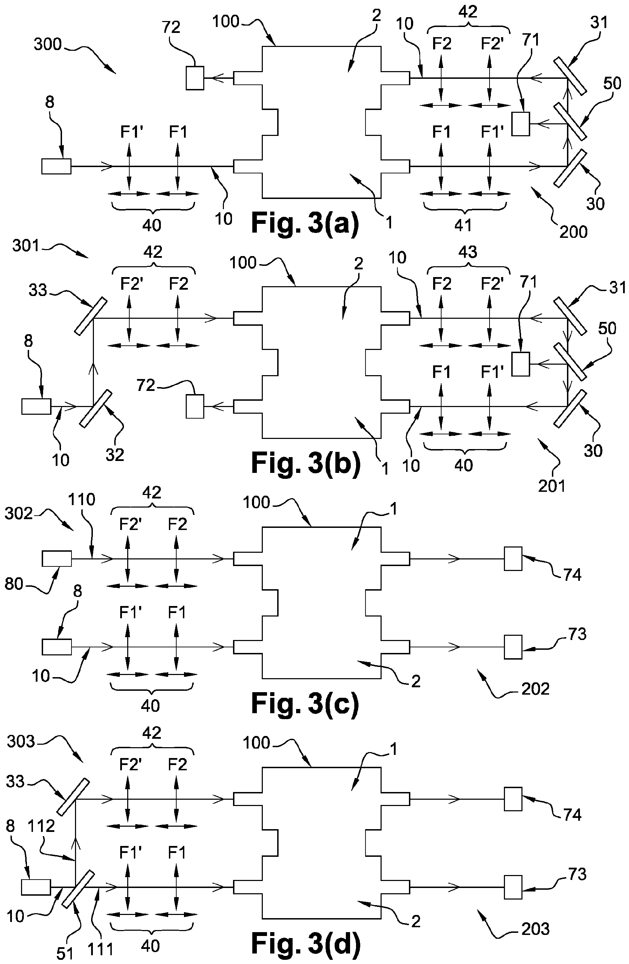

Le faisceau laser 10 est émis par un dispositif optique 200, 201, 202, 203 comportant à cet effet un laser situé à l'extérieur des chambres 1, 2 du réacteur 100. Ce dispositif optique sera décrit par la suite de façon plus détaillée à l'appui des figures 3(a) à 3(d). En passant dans cette première zone d'interaction 5, le précurseur du cœur forme le cœur des nanoparticules par pyrolyse.

Le cœur ainsi formé est alors amené dans le canal de communication 3' entre les deux chambres 1, 2. Ce canal de communication 3' sert à transmettre le cœur des nanoparticules formées dans la première chambre 1 en direction de la deuxième chambre 2. A cet effet, il est avantageusement muni d'une partie inférieure conique 32. A cet effet également, le flux de gaz neutre aide avantageusement au transfert du cœur des nanoparticules vers la deuxième chambre 2.

Parallèlement à la transmission du cœur des nanoparticules vers la deuxième chambre 2, un précurseur de la coquille est amené dans la deuxième chambre 2.

Le cœur des nanoparticules et le précurseur de la coquille se mélangent donc dans la deuxième chambre 2, et plus précisément dans le canal 3' de communication entre les deux chambres 1, 2 du réacteur 100. Ce mélange doit s'effectuer avant une deuxième zone d'interaction 7 avec le faisceau laser 10. A cet égard, les conditions de débit pour chaque précurseur sont contrôlées.

Le précurseur de la coquille des nanoparticules est ainsi amené, avec le cœur des nanoparticules, dans la zone d'interaction 7 avec le faisceau laser 10 afin de former la coquille et les nanoparticules cœur-coquille. Ce faisceau laser 10 est généré par le dispositif optique précité.

Une fois les nanoparticules cœur-coquille formées, elles sont extraites du réacteur 100 par le biais d'un canal 15 de récupération de ces nanoparticules, comportant avantageusement des collecteurs avec des barrières filtrantes.

L'alimentation en précurseur de chaque chambre 1, 2 est faite de manière indépendante. En pratique, cela permet donc de former tout type de nanoparticule de type cœur-coquille.

Par ailleurs, le dispositif 300, 301, 302, 303 permet d'obtenir des nanoparticules de type cœur-coquille avec une répartition homogène de la coquille autour du cœur.

De plus, les précurseurs peuvent se présenter sous forme de gaz, de liquide ou de solide.

A titre d'exemple, on peut envisager des précurseurs gazeux de type silane, éthylène ou diborane.

On peut envisager des précurseurs liquides de type isopropoxyde de titane. On peut également envisager d'ajouter de l'acétylène, du tétrachlorure de titane, du butoxyde de zirconium ou d'aluminium, les acétonates, les acétylacétonates, nitrates de métaux ou de terres rares et plus généralement tous les précurseurs organométalliques utilisés pour le dépôt chimique en phase vapeur, dans la mesure où ceux-ci sont mélangées avec un sensibilisateur leur permettant d'absorber la radiation laser.

On peut enfin envisager des poudres solides, comme de la nanopoudre de Zinc, avantageusement amenée dans un gaz porteur neutre.

Nous allons maintenant décrire différents dispositifs optiques susceptibles d'être employés avec le réacteur 100 représenté sur la figure 2. Chaque dispositif optique a pour fonction d'éclairer chacune des deux chambres et comprend, à cet effet, au moins un laser.

Sur la figure 3(a), le dispositif optique 200 comprend un laser 8 et un jeu de deux miroirs 30, 31. Le laser 8 est disposé sur le côté de la première chambre 1 pour éclairer celle-ci en premier. Le faisceau laser 10 présente un axe de propagation sécant à la verticale et, dans le cas d'espèce, horizontal. La première chambre 1 comprend donc des parois latérales transparentes 16, 17 au faisceau laser 10 pour permettre au faisceau laser de la traverser de part en part, selon un axe sensiblement horizontal.

On pourrait prévoir un autre agencement respectif du laser 8 par rapport au réacteur 100. Cependant, cet agencement est particulièrement pratique pour faire en sorte que le faisceau laser soit apte à interagir avec lesdits précurseurs afin de former le cœur et la coquille.

Le jeu de miroirs 30, 31 permet de rediriger le faisceau laser 10 issu de la première chambre 1 en direction de la deuxième chambre 2, afin que le faisceau laser traverse la deuxième chambre selon un axe de propagation sécant à la verticale et, dans le cas d'espèce, horizontal. La deuxième chambre 2 comprend donc des parois latérales transparentes 18, 19 au faisceau laser 10.

Avantageusement, les miroirs 30, 31 seront plans et associés à un ou plusieurs moyens de focalisation 40, 41, 42. Ainsi, et comme représenté sur la figure 3(a), il est possible de mettre en œuvre un premier moyen de focalisation 40 entre le laser 8 et la première chambre 1, un deuxième moyen de focalisation 41 entre la première chambre 1 et le miroir 30 (afin de re-collimater le faisceau laser 10 issu de la première chambre 1 avant le passage par les miroirs 30, 31) et enfin, un troisième moyen de focalisation 42 entre le miroir 31 et la deuxième chambre 2.

En variante, on peut supprimer le troisième moyen de focalisation 42 en conservant les deux autres moyens de focalisation 40, 41. Dans ce cas, seul le faisceau laser 10 passant par la première chambre 1 est focalisé.

Selon une autre variante, il est encore possible de conserver uniquement le troisième moyen de focalisation 42, sans mettre en oeuvre les deux autres 40, 41. Dans ce cas, seul le faisceau laser 10 passant par la deuxième chambre 2 est focalisé.

Par ailleurs, ces miroirs plans 30, 31 peuvent être mis en œuvre seuls, sans moyen de focalisation.

Une lame séparatrice 50 peut être prévue entre les deux chambres 1, 2 sur le parcours du faisceau laser 10, et avantageusement entre les deux miroirs 30, 31. Par exemple, on peut envisager une lame séparatrice 50 en ZnSe.

L'introduction d'une lame séparatrice 50 permet de contrôler la puissance du faisceau laser 10 traversant la deuxième chambre 2, laquelle est dans ce cas nécessairement plus faible que la puissance du faisceau laser 10 traversant la première chambre 1.

Ceci peut avoir un intérêt en fonction de la nature chimique des précurseurs injectés dans les chambres 1, 2. En effet, certains précurseurs nécessitent moins d'énergie que d'autres pour être décomposés. Ceci peut également avoir un intérêt pour contrôler les caractéristiques structurales des nanoparticules de type cœur-coquille finalement attendues. En effet, cela nécessite des températures plus ou moins élevées qui peuvent être contrôlées avec la lame séparatrice 50.

Des moyens d'arrêt 71, 72 du faisceau laser sont prévus, notamment en sortie de la deuxième chambre 2.

Il convient de noter que les miroirs plans 30, 31 pourraient être remplacés par des miroirs concaves. De tels miroirs permettent non seulement de rediriger le faisceau laser 10 d'une chambre vers l'autre comme les miroirs plans, mais ils assurent aussi la fonction de focalisation du faisceau laser 10. Un moyen de focalisation n'est donc plus nécessaire avec un miroir concave. Par exemple, il est envisageable de remplacer le miroir 31 et le moyen de focalisation 42 par un tel miroir concave.

Dans ce cas, l'emplacement des miroirs concaves est important pour définir correctement les zones de focalisation du faisceau laser dans chaque chambre 1, 2, ces zones de focalisation définissant les zones d'interaction 5, 7 avec les précurseurs.

La variante 201 du dispositif optique 200 présentée à l'appui de la figure 3(a) ne permet donc pas d'obtenir une puissance du faisceau laser 10 plus élevée dans la deuxième chambre 2 que dans la première chambre 1.

Pour cette raison, et en fonction de la nature chimique des précurseurs du cœur et de la coquille, il est envisageable d'inverser le montage, c'est-à-dire de faire passer le faisceau laser 10 issu du laser 8 en premier lieu par la deuxième chambre 2 puis, par la première chambre 1.

Cette possibilité est représentée sur la figure 3(b).

Par rapport à la figure 3(a), le laser 8 n'a pas changé de place par rapport au réacteur 100. Un jeu de miroirs 30, 31, 32, 33 est prévu pour faire passer le faisceau laser 10 par la deuxième chambre 2 puis par la première chambre 1.

Avantageusement, les miroirs 30, 31, 32, 33 sont des miroirs plans associés à des moyens de focalisation 41, 42, 44 dont certains 41, 44 servent à définir les zones d'interactions avec les précurseurs dans les chambres 1, 2.

Ainsi, et comme représenté sur la figure 3(b), il est possible de mettre en œuvre un premier moyen de focalisation 42 entre le laser 8 et la deuxième chambre 2 et plus précisément après le miroir 33, un deuxième moyen de focalisation 43 entre la deuxième chambre 2 et le miroir 31 (pour re-collimater le faisceau laser 10 issu de la deuxième chambre 2 avant le passage par les miroirs 31, 30) et enfin, un troisième moyen de focalisation 40 entre le miroir 30 et la première chambre 1.

En variante, on peut supprimer le troisième moyen de focalisation 40 en conservant les deux autres moyens de focalisation 40, 41. Dans ce cas, seul le faisceau laser 10 passant par la deuxième chambre 2 est focalisé.

Selon une autre variante, il est encore possible de conserver uniquement le troisième moyen de focalisation 40, sans mettre en œuvre les deux autres 42, 43. Dans ce cas, seul le faisceau laser 10 passant par la première chambre 1 est focalisé.

Par ailleurs, on peut supprimer les moyens de focalisation et ne conserver que les miroirs plans.

Selon une autre variante, on remplace les miroirs plans 30, 31, 33 par des miroirs concaves remplissant également la fonction de focalisation du faisceau laser.

Par ailleurs, une lame séparatrice 50 peut être prévue entre la deuxième chambre 2 et la première chambre 1 en référence au sens de parcours du faisceau laser 10 et avantageusement entre les deux miroirs 30, 31. Cette lame est par exemple réalisée en ZnSe. On peut ainsi contrôler le rapport de la puissance du faisceau laser 10 traversant la première chambre 1 sur la puissance du faisceau laser traversant la deuxième chambre 2.

Bien entendu, on pourrait disposer le laser 8 en vis-à-vis de la deuxième chambre 2, ce qui permettrait de supprimer les miroirs 32, 33.

Si l'on souhaite s'affranchir d'un éventuel problème de puissance disponible du faisceau laser entre les deux chambres, il est encore envisageable de mettre en œuvre un dispositif optique 202 comportant deux lasers 8, 80, chaque laser étant dédié à l'éclairement de l'une des deux chambres 1, 2 (faisceau laser 10 ou faisceau laser 110, respectivement).

Cette possibilité est représentée sur la figure 3(c).

Chaque laser 8, 80 est alors disposé sur le côté du réacteur 100, en vis-à-vis de l'une des deux chambres. Chaque faisceau laser 10, 110 traverse donc la chambre associée latéralement.

Avantageusement, à chaque laser 8, 80 est associé un moyen de focalisation 40, 42 servant à définir les zones d'interaction 5, 7 précitées. En variante, aucun moyen de focalisation n'est mis en œuvre ou bien l'un seulement des deux lasers 8, 80 est associé à un tel moyen de focalisation.

Enfin, il est également envisageable de mettre en œuvre un dispositif optique 203 capable d'éclairer les deux chambres 1, 2 en parallèle avec un seul laser 8. Le laser 8 peut alors être positionné, par rapport au réacteur 100, comme sur les figures 3(a) ou 3(b). A cet effet, une lame séparatrice 51 est nécessaire pour séparer le faisceau laser 10 issu du laser 8 en deux faisceaux 111, 112. Cette lame 51 peut être réalisée en ZnSe. Elle peut, en fonction des besoins, être définie pour transmettre plus de puissance à l'une des deux chambres 1, 2 ou transmettre une puissance égale à chaque chambre 1, 2. Au moins un miroir 33, de préférence plan, est dans ce cas nécessaire.

Cette dernière possibilité est représentée sur la figure 3(d).

Il convient de noter que cette dernière possibilité est particulièrement souple dans son utilisation. En effet, elle permet de contrôler la puissance d'éclairement injectée dans chaque chambre 1, 2 sans être contraint par un rapport de puissance entre les deux chambres comme pour les variantes des figures 3(a) et 3(b). Et elle évite l'emploi de deux lasers comme pour la variante représentée sur la figure 3(c).

Avantageusement, à chaque faisceau laser 111, 112 est associé un moyen de focalisation 40, 42 qui sert à définir les zones d'interaction 5, 7 précitées. Dans ce cas, le miroir 33 est un miroir plan.

En variante, l'un seulement des deux faisceaux lasers 111, 112 est associé à un tel moyen de focalisation. Dans le cas où seul le faisceau laser 112 passant par le miroir 33 est focalisé, le miroir 33 est plan.

Le miroir plan 33 et le moyen de focalisation 42 représentés sur la figure 3(d) peuvent être remplacés par un miroir concave remplissant également la fonction de focalisation remplie par le moyen de focalisation 42.

Selon une autre variante, aucun moyen de focalisation n'est prévu.

Quelle que soit la variante envisagée pour le dispositif optique, le laser 8, 80 peut être un laser de type CO₂ émettant à une longueur d'onde de 10,6 microns. D'autres types de lasers connus de l'homme du métier pour leur capacité à décomposer certains précurseurs peuvent être envisagés.

Chaque moyen de focalisation 40, 41, 42, 43 peut être formé par une lentille sphérique ou une ou deux lentille(s) cylindrique(s). Sur les figures 3(a) à 3(d), chaque moyen de focalisation 40, 41, 42, 43 est constitué de deux lentilles cylindriques.

Lorsqu'une lentille sphérique est employée, on peut faire varier le diamètre de la tâche focale définissant le cœur de la zone d'interaction en modifiant la distance entre la lentille et la zone d'interaction. Avec une lentille cylindrique, on peut faire varier la hauteur de la tâche focale en modifiant la distance entre la lentille et la zone d'interaction. Avec deux lentilles cylindriques, on peut faire varier à la fois la largeur et la hauteur de la tâche focale en modifiant d'une part, la distance entre les deux lentilles et d'autre part, la distance entre le couple de lentilles et la zone d'interaction.

Il convient de noter que modifier la distance entre le moyen de focalisation (40, 42 sur la figure 3(a) ; 42, 40 sur la figure 3(b) ; 40 et/ou 42 sur les figures 3(c) et 3(d)) du faisceau laser 10 et la zone d'interaction entre ce faisceau laser 10 et les précurseurs revient, en pratique, à modifier la distance entre ce moyen de focalisation et la chambre 1, 2 avoisinante (sur la figure 3(a) par exemple, le moyen de focalisation 40 est celui qui avoisine la première chambre 1 et le moyen de focalisation 42 celui qui avoisine la deuxième chambre 2), dans laquelle se trouve la zone d'interaction.

Ces différents moyens de focalisation permettent donc, en modifiant la position des lentilles, de définir, pour un laser donné, la puissance incidente par unité de surface (fluence) du faisceau laser et donc la température au sein de cette zone.

Cela confère au dispositif une grande adaptabilité, utile pour synthétiser différents types de nanoparticules de type cœur-coquille. Le choix s'effectue en fonction de la nature chimique des précurseurs destinés à former le cœur et la coquille des nanoparticules cœur-coquille.

On peut prendre l'exemple d'une lentille sphérique de focale F' = 750mm, dont la position est ajustable d'une distance comprise entre 750mm et 1060mm par rapport à la zone d'interaction entre le faisceau laser et les précurseurs.

Selon cet exemple, le diamètre de la tâche focale est alors ajustable, en fonction de la position de la lentille, entre une valeur minimum proche de 0,5mm et une valeur maximum de quelques millimètres. Le diamètre minimal de la tâche focale est obtenu lorsque la distance entre la lentille et la zone d'interaction entre le laser et les précurseurs est égale à la focale de la lentille. Au contraire, les dimensions maximales de la tâche focale sont obtenues lorsque la distance entre la lentille et le point d'interaction du laser et des précurseurs est la plus grande. De cette manière, il est possible de faire varier la fluence incidente du laser au point d'interaction en gardant une puissance laser incidente constante. La fluence incidente du laser au point d'interaction peut avoir une influence sur l'efficacité de décomposition des précurseurs.

En utilisant deux lentilles cylindriques à la place d'une lentille sphérique, et en croisant leurs plans de focalisation, on ajuste séparément, en jouant sur la distance de chaque lentille par rapport à la zone d'interaction, la hauteur et la largeur de la tache focale.

Si l'on souhaite réduire les dimensions minimum de cette tâche focale, il est envisageable de mettre en œuvre un élargisseur de faisceau (non représenté) en sortie du laser 8, 80. Ainsi, avec un laser CO₂ fonctionnant à une longueur d'onde de 10,6 microns, un faisceau laser élargi à 45mm de diamètre et une lentille sphérique de focale de 150mm, on peut espérer atteindre une tâche focale de l'ordre de 170microns.

Les dimensions de la tâche focale peuvent également être adaptées, en particulier en modifiant la fluence du faisceau laser, avec des miroirs concaves. A cet effet, on règle alors la position du miroir concave par rapport à la chambre avoisinante du réacteur.

Nous allons maintenant décrire plus précisément une partie du réacteur, au niveau de laquelle les précurseurs de la coquille sont amenés à l'intérieur du canal 3' de communication entre les deux chambres 1, 2 par ladite au moins une ouverture E₁, E₂, ..., E_{N}.

Différentes réalisation sont possibles, et parmi ces possibilités, quatre d'entre elles sont plus particulièrement représentées sur les figures 4 à 7.

Sur ces figures 4 à 7, le choix a été fait de prévoir deux canaux 6', 6" d'amenée du précurseur de la coquille, dont chaque extrémité se présente sous la forme d'une chambre 60 de distribution commune. En pratique, chaque canal d'amenée peut être relié à la source 14.

Comme cela a été expliqué précédemment, on pourrait ne prévoir qu'un seul canal d'amenée 6' (cf. figure 2). On pourrait également prévoir plus de deux canaux d'amenée. Cependant, le fait de prévoir deux canaux d'amenée 6', 6" est avantageux car il permet un juste équilibre entre la possibilité d'amener le précurseur rapidement dans la chambre 60 de distribution, de façon homogène et la complexité du réacteur 100. Pour ces deux canaux d'amenée, le choix d'une chambre commune ne présente un intérêt que pour simplifier la conception du réacteur 100.

Ainsi, dans tous les cas, un canal d'amenée 6', 6" d'un précurseur de la coquille présente une extrémité se présentant sous la forme d'une chambre 60 de distribution, entourant le canal 3' de communication entre les deux chambres 1, 2. Cette chambre 60 de distribution présente au moins une ouverture permettant la communication entre la chambre 60 et le canal 3' de communication entre les deux chambres 1, 2.

La figure 4 représente une première possibilité, dans laquelle il est prévu deux ouvertures E₁, E₂, entre la chambre 60 de distribution et le canal 3' de communication entre les deux chambres 1, 2 du réacteur 100.

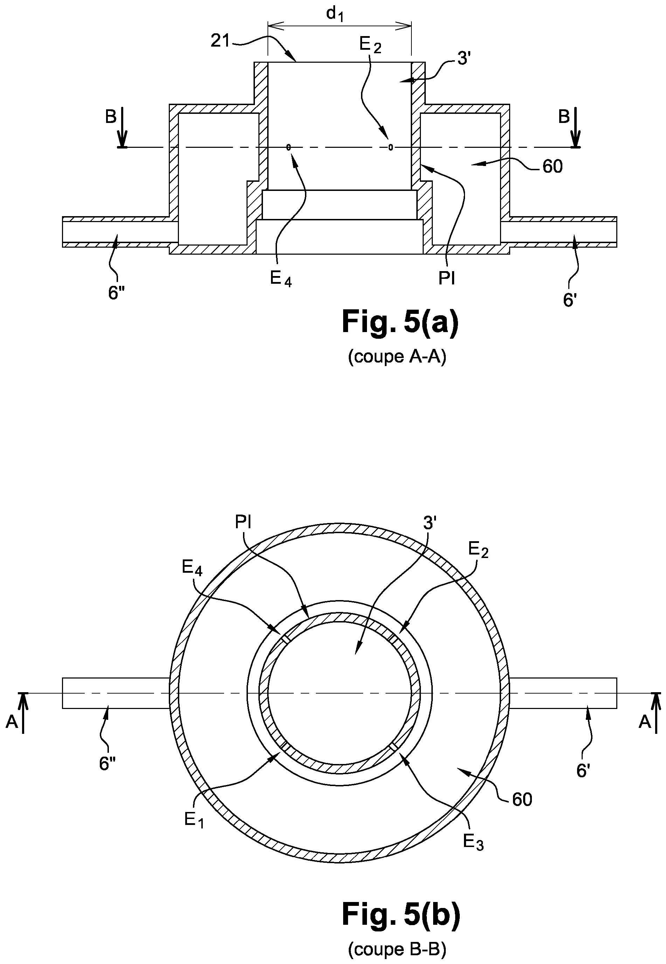

La figure 5 représente une autre possibilité, dans laquelle il est prévu quatre ouvertures E₁, E₂, E₃ et E₄, entre la chambre 60 de distribution et le canal 3' de communication entre les deux chambres 1, 2 du réacteur 100.

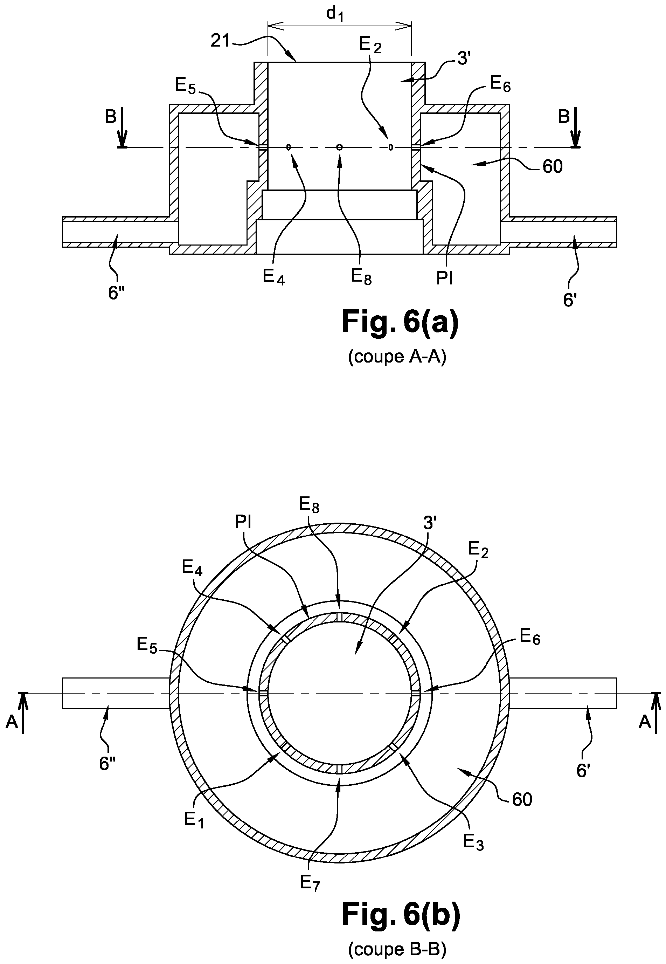

La figure 6 représente une autre possibilité, dans laquelle il est prévu huit ouvertures E₁, E₂, E₃, E₄, E₅, E₆, E₇ et E₈ entre la chambre 60 de distribution et le canal 3' de communication entre les deux chambres 1, 2 du réacteur 100.

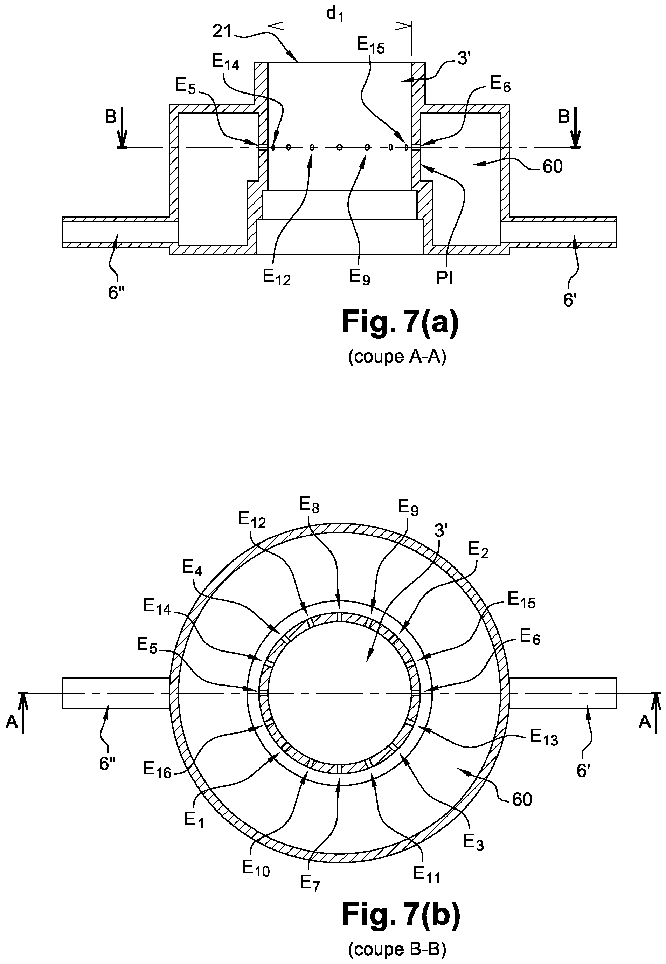

Enfin, la figure 7 représente encore une autre possibilité, E₁, dans laquelle il est prévu seize ouvertures E₁, E₂, E₃, E₄, E₅, E₆, E₇, E₈, E₉, E₁₀, E₁₁, E₁₂, E₁₃, E₁₄, E₁₅ et E₁₆ entre la chambre 60 de distribution et le canal 3' de communication entre les deux chambres 1, 2 du réacteur 100.

Comme on peut le comprendre des figures 4 à 7, le nombre d'ouverture E₁, ..., E_{N} sera avantageusement compris entre 2 et 16. La présence d'au moins deux ouvertures entre la chambre 60 de distribution et le canal 3' de communication entre les deux chambres 1, 2 du réacteur est en effet avantageuse pour assurer une répartition adéquate du précurseur au sein du canal 3'. Par ailleurs, si plus de 16 ouvertures peuvent être envisagées, augmenter le nombre d'ouvertures au-delà de cette quantité ne présente que peu d'intérêt sur le contrôle de la répartition adéquate du précurseur au sein du canal 3'.

La forme de chaque ouverture E₁, ..., E_{N} n'a pas d'importance, mais généralement on prévoira une forme circulaire, comme cela est d'ailleurs représenté sur les figures 4 à 7. Chaque ouverture E₁, ..., E_{N} pourra présenter une plus grande dimension (se confond avec un diamètre dans le cas d'une ouverture circulaire) comprise entre 0,1mm et 5mm, de préférence entre 0,5mm et 3mm.

Comme cela est représenté sur les figures 4 à 7, les ouvertures sont avantageusement équiréparties sur la périphérie interne PI de la chambre 60 de distribution. Par équirépartition, il convient de comprendre que les ouvertures sont réparties à intervalle angulaire régulier entre deux ouvertures qui se succèdent sur la périphérie interne PI de la chambre 60 de distribution. Par exemple, dans le cas particulier de la figure 4 (deux ouvertures), cette équirépartition implique que les ouvertures E₁, E₂ sont diamétralement opposées sur la périphérie interne PI de la chambre 60 de distribution, en l'occurrence de forme annulaire. Cela permet de mieux contrôler la distribution du précurseur au sein du canal 3' de communication entre les deux chambres 1, 2 du réacteur 100,

Avantageusement également, lorsque plusieurs ouvertures E₁, .., E_{N} sont prévues, elles sont identiques. Là également, cela permet de mieux homogénéiser la répartition du précurseur de la coquille au sein du canal 3' de communication entre les deux chambres 1, 2 du réacteur 100.

### Exemple de réalisation (test expérimental): Synthèse de nanoparticules dont le cœur est en silicium et la coquille en carbone.

Le dispositif optique 200 employé est celui de la figure 3(c), sans moyen de focalisation 40, 42.

Le réacteur 100 est celui qui est représenté sur la figure 2, avec le sous-ensemble de la figure 5. Le silane est utilisé comme précurseur du cœur (silicium). De l'éthylène est utilisé comme précurseur de la coquille (carbone).

Sur la figure 5, on note la présence de 4 ouvertures, E₁ à E₄. Chaque ouverture E₁ à E₄, en l'occurrence circulaire, présente un diamètre de 1mm.

Les paramètres suivants sont utilisés :
- débit silane (chambre 1) = 50 sccm;
- débit éthylène (chambre 2) = 500 sccm, 600 sccm et 700 sccm (il s'agit d'un débit total arrivant dans la chambre 60, via dans le cas d'espèce, les deux canaux d'amenée 6', 6") ;
- puissance du laser 8 (chambre 1) = 1000 W ;
- puissance du laser 80 (chambre 2) = 1300 W ;
- pression dans le réacteur = atmosphérique ;
- diamètre entrée (d) 11 = 2 mm ;
- diamètre (d₁) du canal de communication 3' entre les deux chambres, d₁ = 3,33 cm.

Des nanoparticules (cœur + coquille) d'environ 15 à 20nm de diamètre ont ainsi pu être obtenues.

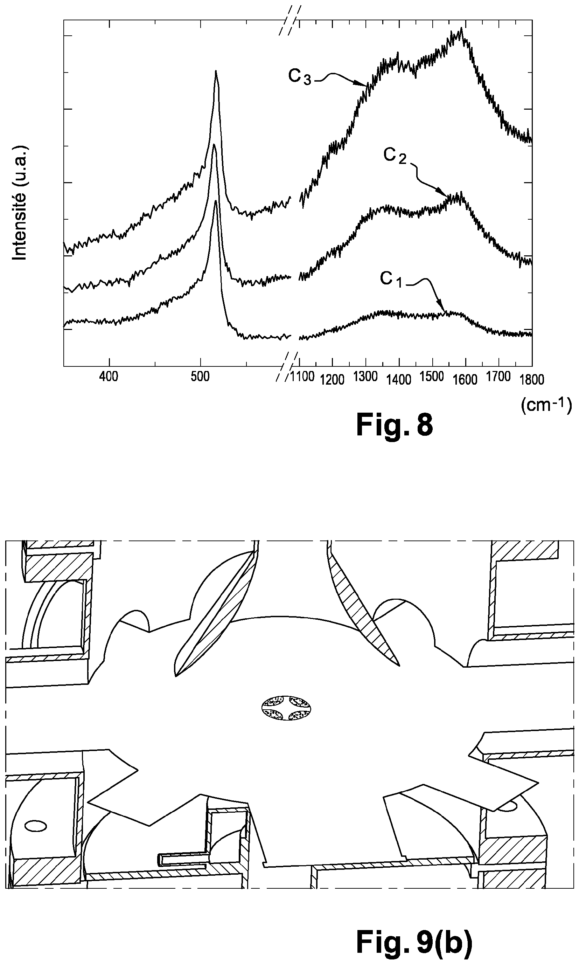

La figure 8 est une spectroscopie Raman avec en abscisses, la longueur d'onde (cm⁻¹) et en ordonnées l'intensité du signal (unité arbitraire). Cette mesure par spectroscopie Raman est une mesure locale.

Trois courbes sont fournies à savoir les courbes C1, C2 et C3. La courbe C1 correspond au débit de 500sccm d'éthylène (précurseur de la coquille en carbone). La courbe C2 au débit de 600 sccm d'éthylène. La courbe C3 correspond au débit de 700 sccm d'éthylène. Toutes les mesures indiquées sont fournies pour une quantité de silicium donnée, qui est la même pour les différentes courbes.

Sur cette figure 8, et pour chaque courbe C1 à C3, on constate la présence d'un premier pic, dans la gamme de longueur d'onde 500-520 cm⁻¹, qui correspond à la présence de silicium (cœur). On constate également, pour chaque courbe C1 à C3, la présence d'un deuxième « pic », situé dans la gamme 1200 - 1600 cm⁻¹, qui correspond à la présence de carbone (coquille). On note également que plus le débit d'éthylène augmente et plus l'intensité du signal Raman est important, ce qui montre que plus de carbone est obtenu, sur les nanoparticules cœur-coquille, pour une quantité en silicium donnée.

En complément, on peut donner des mesures globales.

Ainsi, on peut noter que, pour le cas de la courbe C2 (600sccm d'éthylène), le pourcentage massique de carbone, dans les poudres récupérées en sortie du réacteur, est de 6,7%. Pour le cas de la courbe C3, ce pourcentage massique de carbone est de 6,8%.

Cela montre l'efficacité de la dissociation de l'éthylène et de l'incorporation du carbone (coquille) autour du cœur en silicium.

### Exemple de simulation numérique (exemple 1)

Le réacteur 100 est celui qui est représenté sur la figure 2, avec le sous-ensemble de la figure 5. Le silane est utilisé comme précurseur du cœur (silicium). De l'éthylène est utilisé comme précurseur de la coquille (carbone).

Sur la figure 5, on note la présence de 4 ouvertures, E₁ à E₄. Chaque ouverture E₁ à E₄, en l'occurrence circulaire, présente un diamètre de 1mm.

Les paramètres suivants ont été utilisés :
- débit silane (chambre 1) = 100 sccm;
- débit éthylène (chambre 2) = 400sccm;
- pression dans le réacteur = atmosphérique ;
- diamètre entrée 11 (d) = 2 mm ;
- diamètre (d₁) du canal de communication 3' entre les deux chambres, d₁ = 3,33 cm.

Aucune donnée spécifique sur le dispositif optique n'a été nécessaire pour réaliser cette simulation numérique, l'objectif étant de voir comment l'éthylène se répartit dans le canal 3' de communication entre les deux chambres 1, 2 après le passage à travers les ouvertures séparant la la chambre 60 de distribution de ce canal 3'.

Le code de calcul utilisé est le code commercial FloEFD version 15.

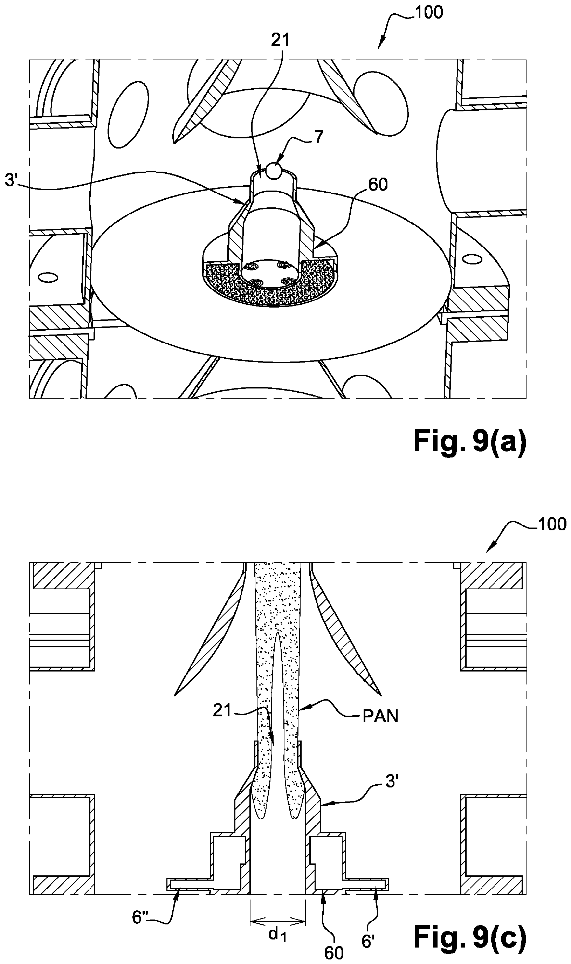

Les résultats sont fournis sur la figure 9, qui représente selon plusieurs vues, l'évolution de la fraction volumique en éthylène (précurseur de la coquille en carbone) au sein du canal 3' de communication entre les deux chambres 1, 2 du réacteur 100.

Plus précisément, sur la figure 9(a) on peut constater le panache PAN d'éthylène, au sein du canal 3', et sortant de chacune des quatre ouvertures E₁ à E₄.

Sur la figure 9(b), on observe ce même panache PAN, mais dans un plan de coupe perpendiculaire à l'axe AX du réacteur, pris au niveau de la zone d'interaction 7 supposée avec le faisceau laser 10 susceptible d'être émis avec le laser 80. A ce niveau, on note que l'éthylène se répartit sous la forme d'un disque relativement homogène et en tout cas nettement plus homogène qu'avec le dispositif du document D1 (figure 4 de ce document).

Ceci est particulièrement avantageux pour augmenter le rendement de conversion de l'éthylène, dans cette zone d'interaction 7, en coquille pour les cœurs provenant de la première chambre 1.

Bien que cela ne soit pas présenté, des résultats tout à fait comparables ont été obtenus, par simulation numérique, et dans les mêmes conditions, avec :
- deux ouvertures comme proposé sur la figure 4 (exemple 2),
- huit ouvertures comme proposé sur la figure 6 (exemple 3), et
- seize ouvertures comme proposé sur la figure 7 (exemple 4).

Dans tous les cas, ces simulations numériques montrent une répartition plus homogène de l'éthylène au niveau de la zone d'interaction 7 avec le faisceau laser, par rapport à l'art antérieur du document D1 (figure 4 de ce document). La répartition de l'éthylène est alors assimilable à celle d'un disque. En d'autres termes, le précurseur du carbone se mélange mieux aux nanoparticules de silicium que dans l'art antérieur et ce mélange plus homogène est favorable à l'obtention de nanoparticules de type cœur-coquille.

Cependant, on a pu noter que plus le nombre d'ouvertures augmentait et plus l'homogénéité de cette répartition au niveau de la zone d'interaction 7 avec le faisceau laser, bien qu'acceptable dans la gamme comprise entre deux et seize orifices, se dégradait. Ainsi, avec seize ouvertures, toutes les autres conditions de simulation étant identiques (notamment le diamètre d'une ouverture et le débit d'éthylène amené dans la chambre 60 de distribution), la répartition de l'éthylène au niveau de la zone 7 d'interaction avec le faisceau laser se modifie, comparé au cas où quatre ouvertures sont envisagées, en prenant un peu plus la forme d'un anneau que celle d'un disque.

Selon les inventeurs, ceci est lié, au fait que pour un diamètre d'ouverture donné et un débit donné, la vitesse moyenne du précurseur (éthylène en l'occurrence) dans une ouverture donnée diminue avec l'augmentation du nombre d'ouvertures, ou inversement.

D'autres simulations numériques ont été effectuées permettant de confirmer l'influence de la vitesse du précurseur dans une ouverture.

Ainsi, une simulation numérique (exemple 5) a été effectuée dans les conditions de l'exemple 1, mais avec un débit d'éthylène doublé, soit un débit d'éthylène (chambre 2) de 800 sccm (cm³/mn en conditions standard). En conséquence, la vitesse moyenne dans une ouverture donnée est doublée.

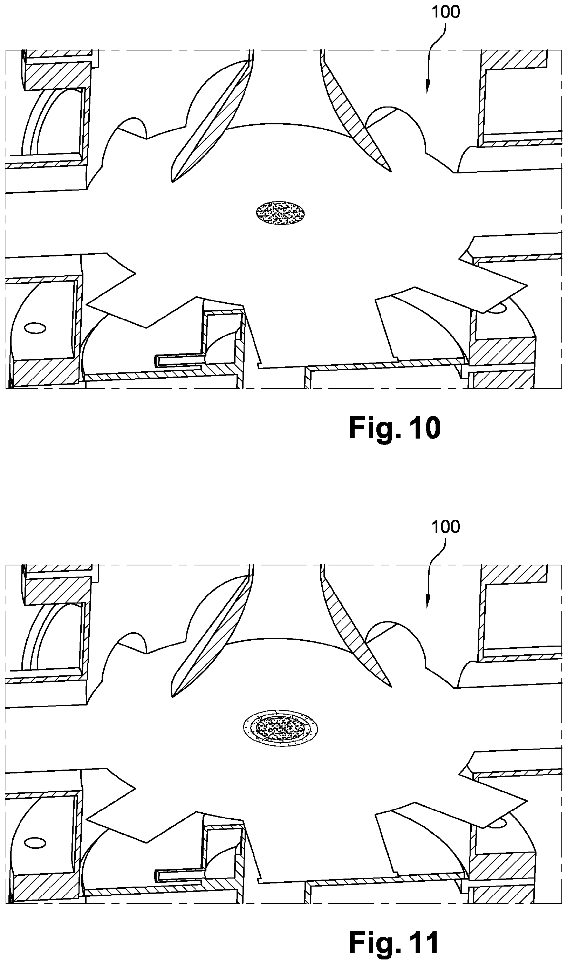

Les résultats de cette simulation numérique (exemple 5) sont présentés sur la figure 10.

On constate que l'éthylène présente, au niveau de la zone 7 d'interaction avec le laser, une forme de disque très homogène, encore plus homogène que sur la figure 9(b).

Par ailleurs, une autre simulation numérique (exemple 6) a été effectuée dans les conditions de l'exemple 1, mais avec un débit d'éthylène quadruplé, soit un débit d'éthylène (chambre 2) de 1600sccm. On notera que par rapport aux conditions de l'exemple 5, cela revient à doubler le débit d'éthylène.

Les résultats de cette simulation numérique (exemple 6) sont présentés sur la figure 11.

On constate que l'éthylène présente, au niveau de la zone 7 d'interaction avec le laser, une forme de disque homogène, mais avec une concentration plus importante vers le centre.

En d'autre termes, en comparant les figures 11, 10, et 9(b), l'augmentation de débit et donc l'augmentation de la vitesse dans une ouverture donnée se traduit par une concentration plus importante de l'éthylène au centre du disque.

Encore une autre simulation numérique (exemple 7) a été effectuée dans les conditions de l'exemple 3, mais avec un débit d'éthylène quadruplé. Il a alors été constaté que la répartition de l'éthylène au niveau de la zone 7 d'interaction avec le laser était identique à celle de la figure 10, relative à l'exemple 5. Ceci est tout à fait cohérent car entre l'exemple 7 et l'exemple 5, on a certes doublé le nombre d'ouvertures, mais aussi doublé le débit, ce qui implique que la vitesse moyenne dans une ouverture donnée est identique.

Enfin, il convient de noter que, dans une dernière simulation numérique (exemple 8), les conditions de l'exemple 1) ont été reprises, à l'exception du diamètre d d'une ouverture, qui a été doublé et donc porté à d = 2mm. Un doublement du diamètre correspond, toutes choses égales par ailleurs à une diminution de l'ordre de quatre de la vitesse moyenne dans une ouverture donnée. Le résultat de cette simulation numérique a donc donné, au niveau de la zone 7 d'interaction avec le laser, une répartition conforme à celle obtenue avec l'exemple 4, donc une répartition en forme de disque, mais cependant un peu plus concentrée vers celle d'un anneau.

Tout ceci confirme que, pour mettre en œuvre un procédé conforme à l'invention, il convient de prendre en compte cette vitesse moyenne du précurseur (en l'occurrence l'éthylène) dans une ouverture donnée, séparant la chambre de distribution 60, du canal 3' de communication entre les deux chambres 1, 2 du réacteur 100.

Si l'on prend en compte la situation particulièrement idéale de la figure 10, on a une vitesse moyenne du précurseur pour une ouverture donnée d'environ 4,3 m/s.

Compte tenu des différentes simulations effectuées, les inventeurs considèrent que la vitesse moyenne dans une ouverture donnée devrait être comprise entre 0,5m/s et 20 m/s. Aux faibles vitesses, le disque représentant la forme de l'éthylène au niveau de la zone d'interaction avec le laser est un peu plus concentré en anneau et aux fortes vitesses, ce disque est un peu plus centré. Il convient cependant de ne pas trop augmenter cette vitesse pour éviter des phénomènes de recirculation dans le canal 3'.

Avantageusement, cette vitesse moyenne du précurseur à travers une ouverture donnée sera comprise entre 2 m/s et 15 m/s, plus avantageusement entre 2m/s et 12m/s et encore plus avantageusement entre 3m/s et 6m/s.

Comme on l'aura compris, cette gamme de valeurs dépendra du nombre d'ouvertures, de la surface de passage de la ou chaque ouverture (le diamètre de la ou chaque ouverture pour une ouverture circulaire) et du débit fourni par la source 14. En pratique, on choisira une conception de la chambre 60 de distribution, à savoir la forme et la section de passage d'une ouverture et on réglera le débit fournie par la source pour obtenir la gamme de valeurs de vitesse précitée. Ainsi, l'invention concerne également un procédé de synthèse de nanoparticules de type cœur-coquille par pyrolyse laser, comprenant les étapes suivantes
(a) injecter un précurseur du cœur dans une première chambre d'un réacteur;
(b) éclairer le précurseur du cœur par un faisceau laser afin de former par pyrolyse le cœur des nanoparticules ;
(c) transporter le cœur des nanoparticules ainsi formé à l'étape (b) dans une deuxième chambre du réacteur communiquant avec la première chambre au moyen d'un canal de communication entre les deux chambres ;
(d) injecter un précurseur de la coquille dans la deuxième chambre du réacteur ;
(e) éclairer le précurseur de la coquille avec un faisceau laser afin de former par pyrolyse la coquille des nanoparticules et d'assurer le dépôt de cette coquille autour du cœur ;
caractérisé en ce que l'étape (d) s'effectue par l'intermédiaire d'une chambre (60) de distribution entourant ledit canal (3') de communication entre les deux chambres (1, 2), ladite chambre (60) de distribution étant par ailleurs munie, sur sa périphérie interne (PI), d'au moins une ouverture (E₁, ..., E_{N}) débouchant à l'intérieur dudit canal (3') de communication, de sorte que la vitesse moyenne du précurseur dans ladite au moins une ouverture est comprise entre 0,5 m/s et 20 m/s, de préférence entre 2m/s et 15m/s et encore plus préférentiellement entre 2 m/s et 12 m/s. Plus avantageusement encore, cette vitesse sera comprise entre 3m/s et 6m/s.

Lorsque plusieurs ouvertures sont prévues, la vitesse moyenne du précurseur dans chaque ouverture est comprise entre 0,5 m/s et 20 m/s, de préférence entre 2m/s et 15m/s et encore plus préférentiellement entre 2 m/s et 12 m/s. Là également et plus avantageusement encore, cette vitesse pourra être comprise, pour chaque ouverture, entre 3m/s et 6m/s.

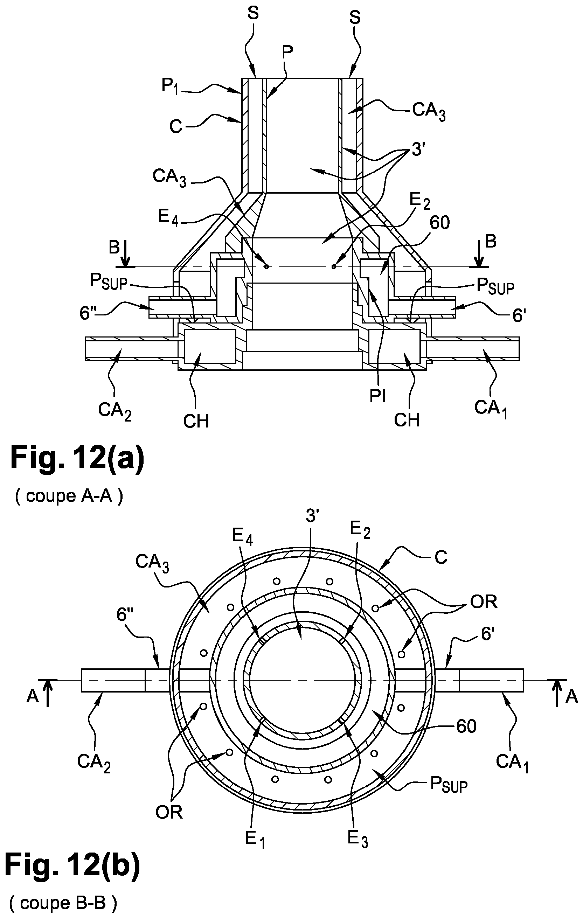

Un autre mode de réalisation est représenté sur la figure 12, laquelle comprend les figures 12(a) et 12(b).

La figure 12(a) est une première vue en coupe d'un sous-ensemble du dispositif et la figure 12(b) une deuxième vue en coupe.

On peut notamment comparer la figure 12(a) à la figure 5(a) et la figure 12(b) à la figure 5(b). En effet, sur les figures 12 et 5, on retrouve notamment la chambre de distribution 60, le canal 3' et quatre orifices E₁, E₂, E₃, E₄ reliant la chambre 60 de distribution au canal 3'.

La différence principale entre la configuration de la figure 12 et celle de la figure 5 tient dans la présence d'une cheminée C entourant le canal 3' de communication entre les deux chambres 1, 2 du réacteur. On comprend que cette cheminée C est située dans la deuxième chambre 2 du réacteur.

Cette cheminée C définit un canal CA₃ entre la paroi P1 de la cheminée C et la paroi P du canal 3' de communication entre les deux chambres 1, 2 du réacteur. La cheminée C est destinée à véhiculer un gaz neutre qui est amené dans le canal CA₃ par l'intermédiaire de canaux d'amenée dédiés CA₁, CA₂. Il convient de noter qu'un seul canal d'amenée pourrait être envisagé.

Avantageusement, et comme représenté sur la figure 12, il est prévu, entre le ou chaque canal d'amenée CA₁, CA₂ et le canal CA₃ entourant le canal 3 de communication entre les deux chambres 1, 2 du réacteur, une chambre CH de distribution. Cette chambre CH de distribution entoure alors le canal 3' de communication, comme le fait la chambre 60 de distribution de précurseurs de la coquille. Lorsque cette chambre CH de distribution est mise en œuvre, il convient alors de prévoir des orifices OR pour faire passer le gaz neutre depuis cette chambre CH de distribution vers le canal CA₃. Cette chambre CH de distribution permet de mieux répartir le gaz neutre dans le canal CA₃. Le nombre d'orifices OR peut être variable. Sur la figure 12, 12 orifices de ce type sont cependant prévus. Afin de répartir au mieux le flux de gaz neutre, il est par ailleurs utile de prévoir une équirépartition de ces orifices OR sur la circonférence de la paroi P_{SUP} de la chambre CH de distribution qui est au contact du canal CA₃, comme cela est représenté sur la figure 12(b).

L'intérêt principal de cette variante de réalisation réside dans le fait que le gaz neutre va pouvoir confiner, en sortie du canal 3' de communication entre les deux chambres 1, 2 du réacteur, les particules de cœur ainsi que les précurseurs de la coquille. Ceci favorise la formation de particules cœur-coquille.

Sur la figure 12, on a représenté le cas où quatre orifices E₁, E₂, E₃ et E₄ sont prévus. Bien entendu, le fait de prévoir une cheminée C et le cas échéant, une chambre CH de distribution peut s'effectuer pour d'autres configurations, notamment celles des figures 4, 6 ou 7.

### Exemple de réalisation (test expérimental additionnel)

La configuration de la figure 12 a été testée dans les mêmes conditions que le test expérimental fournit précédemment et ce, pour des débits d'éthylène de 600sccm, 700sccm et 800sccm (il s'agit toujours d'un débit total arrivant dans la chambre 60, via dans le cas d'espèce, les deux canaux d'amenée 6', 6").

Le débit de gaz neutre, en l'occurrence de l'Argon, a été fixé à 3000 sccm (il s'agit du débit total arrivant dans la chambre de distribution CH). Ce débit est suffisant pour obtenir un effet de confinement des composants sortant du canal 3' de communication entre les deux chambres 1, 2 du réacteur 100.

Chaque orifice OR présente une section circulaire, définie par un diamètre de 2mm.

Par ailleurs, la section S du canal CA3, au niveau de sa sortie, vaut 500mm².

Dans ces conditions, on a relevé que le pourcentage massique de carbone, dans les poudres récupérées en sortie du réacteur et obtenu avec un débit d'éthylène de 600sccm était de 13,8% (mesure globale). Il convient de comparer cette valeur à celle obtenue dans les mêmes conditions, mais en l'absence de cheminée (figure 5), qui est de 6,7%.

Par ailleurs, toujours dans ces conditions, on a relevé que la pourcentage massique de carbone obtenu avec un débit d'éthylène de 700sccm était de 13,9% (mesure globale). Il convient de comparer cette valeur à celle obtenue dans les mêmes conditions, mais en l'absence de cheminée (figure 5), qui est de 6,8%.

Enfin, il convient de noter qu'avec la présence de la cheminée C, il a été possible d'augmenter encore le débit d'éthylène à 800sccm, alors que ce n'est pas réalisable en l'absence de cheminée (en effet, à ce débit et en l'absence de cheminée les poudres recirculent dans la deuxième chambre 2 du réacteur et l'énergie du laser est absorbée par toutes ces poudres). Et avec ce débit et pour la cheminée, le pourcentage massique de carbone a été grandement augmenté, à une valeur de 18,8%.

Le confinement réalisé par le gaz neutre provenant du canal CA3 est donc particulièrement efficace pour augmenter la production de carbone sur les nanoparticules cœur-coquille, pour une quantité en silicium donnée.

Et si l'on augmente également la quantité de silicium, on peut alors augmenter la production de nanoparticules Si@C.

### Exemple de simulation numérique

La configuration de la figure 12 a été testée dans les conditions de l'exemple 1 (aspect géomértiques de la chambre de distribution et des orifices associés et débits mis en œuvre).

Chaque orifice OR présente une section circulaire, définie par un diamètre de 2mm. Par ailleurs, la section S du canal CA3, au niveau de sa sortie, vaut 500mm². En d'autres termes, les paramètres géométriques liés à la présence de la cheminée C sont les mêmes que dans le test expérimental réalisé.

Le débit de gaz neutre, en l'occurrence de l'Argon, a été fixé à 5000 sccm (il s'agit du débit total arrivant dans la chambre de distribution CH).

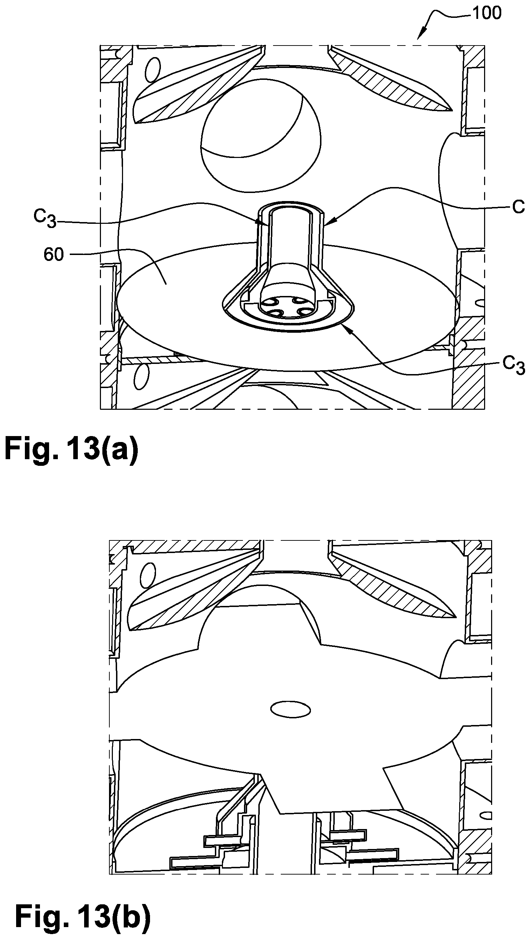

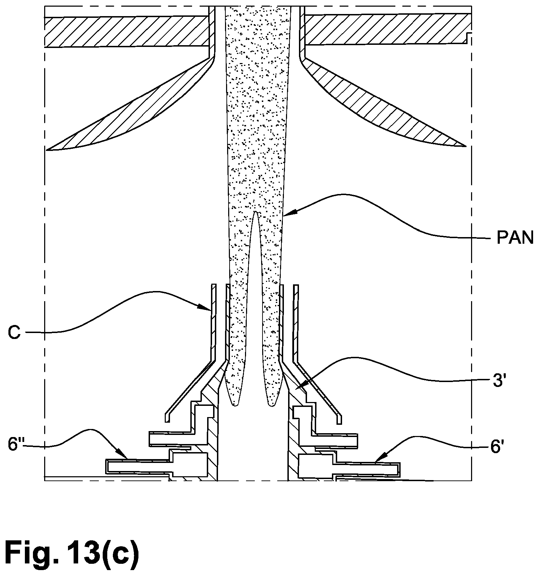

Les résultats de cette simulation numérique sont présentés sur la figure 13, qui représente selon plusieurs vues, l'évolution de la fraction volumique en éthylène (précurseur de la coquille en carbone) au sein du canal 3' de communication entre les deux chambres 1, 2 du réacteur 100.

Plus précisément, sur la figure 13(a) on peut constater le panache PAN d'éthylène, au sein du canal 3', et sortant de chacune des quatre ouvertures E₁ à E₄.

Ce panache PAN est identique à celui de la figure 9(a).

Sur la figure 13(b), on observe ce même panache PAN, mais dans un plan de coupe perpendiculaire à l'axe AX du réacteur, pris au niveau de la zone d'interaction 7 supposée avec le faisceau laser 10 susceptible d'être émis avec le laser 80. A ce niveau, on note que l'éthylène se répartit sous la forme d'un disque très homogène et en tout cas encore plus homogène que celui de la figure 9(b).

On observe donc sur cette figure 9(b), l'effet du confinement, par le flux d'Argon sortant de la cheminée C (non visible sur la figure 13, car celle-ci ne montre que la fraction volumique d'éthylène) du panache d'éthylène.

Ce même confinement est également visible en comparant la figure 13(c) à la figure 9(c). En effet, sur la figure 13(c), on peut observer que les panaches sortant des quatre orifices E₁, E₂, E₃ et E₄ se rejoignent plus rapidement que sur la figure 9(c).

## Revendications

1. Dispositif (300, 301, 302, 303) de synthèse de nanoparticules de type cœur-coquille par pyrolyse laser comprenant :
- un réacteur (100) comportant :
• une première chambre (1) pour la synthèse du cœur, laquelle est munie d'une entrée (11) pour un précurseur du cœur ;
• une deuxième chambre (2) pour la synthèse de la coquille, laquelle est munie d'une entrée (21) pour un précurseur de la coquille ; et
• au moins un canal de communication (3') entre les deux chambres (1, 2) pour transmettre le cœur des nanoparticules destinées à être formées dans la première chambre (1) en direction de la deuxième chambre (2) ;
- un dispositif optique (200, 201, 202, 203) pour éclairer chacune des deux chambres (1, 2), ce dispositif comportant au moins un laser (8, 80) apte à émettre un faisceau laser (10, 101) destiné à interagir avec lesdits précurseurs afin de former le cœur et la coquille ;
**caractérisé en ce qu'**il comprend au moins un canal d'amenée (6', 6") du précurseur de la coquille dont une extrémité se présente sous la forme d'une chambre (60) de distribution située dans la deuxième chambre (2) et entourant le canal de communication (3') entre les deux chambres (1, 2) du réacteur (100), ladite chambre (60) de distribution étant par ailleurs munie, sur sa périphérie interne (PI), d'au moins une ouverture (E₁, ..., E_{N}) débouchant à l'intérieur dudit canal (3') de communication.

2. Dispositif (300, 301, 302, 303) selon la revendication 1, **caractérisé en ce que** ladite chambre (60) de distribution comprend, sur sa périphérie interne (PI), au moins deux ouvertures (E₁, ..., E₁₆) débouchant à l'intérieur dudit canal (3') de communication entre les deux chambres (1, 2) du réacteur (100).

3. Dispositif (300, 301, 302, 303) selon l'une des revendications précédentes, **caractérisé en ce que** ladite chambre (60) de distribution comprend, sur sa périphérie interne (PI), entre deux et seize ouvertures (E₁, ..., E₁₆) débouchant à l'intérieur dudit canal (3') de communication entre les deux chambres (1, 2) du réacteur (100).

4. Dispositif (300, 301, 302, 303) selon l'une des revendications 2 ou 3, **caractérisé en ce que** les ouvertures (E₁, ..., E_{N}) de la chambre (60) de distribution sont équiréparties sur la périphérie interne (PI) de ladite chambre de distribution.

5. Dispositif (300, 301, 302, 303) selon l'une des revendications 2 à 4, **caractérisé en ce que** les ouvertures (E₁, ..., E_{N}) de la chambre (60) de distribution sont identiques.

6. Dispositif (300, 301, 302, 303) selon l'une des revendications précédentes, **caractérisé en ce que** la ou chaque ouverture (E₁, ..., E_{N}) de la chambre (60) de distribution présente une plus grande dimension comprise entre 0,1mm et 5mm, de préférence entre 0,5mm et 3mm.

7. Dispositif (300, 301, 302, 303) selon l'une des revendications précédentes, **caractérisé en ce que** le dispositif optique (200, 201, 202, 203) comprend une pluralité de miroirs (30, 31, 32, 33) agencés de sorte que le faisceau laser émis par le laser (8) soit apte à éclairer successivement les deux chambres (1, 2) du réacteur (100).

8. Dispositif (300, 301, 302, 303) selon la revendication précédente, **caractérisé en ce que** le dispositif optique (200, 201, 202, 203) comprend au moins une lame séparatrice (50) pour régler la puissance du faisceau laser dans chacune des deux chambres (1, 2) du réacteur (100), cette lame séparatrice étant par exemple située entre deux miroirs (30, 31).

9. Dispositif (300, 301, 302, 303) selon l'une des revendications 1 à 5, **caractérisé en ce que** le dispositif optique (200, 201, 202, 203) comprend une lame séparatrice (51) et au moins un miroir (33) agencés de sorte que le faisceau laser (10) émis par le laser soit divisé en deux faisceaux (111, 112) chacun apte à éclairer l'une des deux chambres (1, 2) du réacteur (100).

10. Dispositif (300, 301, 302, 303) selon l'une des revendications 1 à 6, **caractérisé en ce que** le dispositif optique (200, 201, 202, 203) comprend un premier laser (8) pour éclairer la première chambre (1) du réacteur (100) et un deuxième laser (80) pour éclairer la deuxième chambre (2) du réacteur (100).

11. Dispositif (300, 301, 302, 303) selon l'une des revendications précédentes, **caractérisé en ce que** le dispositif optique (200, 201, 202, 203) comprend au moins un moyen de focalisation (40, 41, 42, 43) disposé entre le ou chaque laser (8, 80) et au moins l'une des deux chambres (1, 2) du réacteur (100).

12. Dispositif (300, 301, 302, 303) selon la revendication précédente, **caractérisé en ce que** la distance entre ledit au moins un moyen de focalisation (40, 41, 42, 43) et la chambre (1, 2) de réacteur (100) avoisinante est réglable.

13. Dispositif (300, 301, 302, 303) selon l'une des revendications 10 ou 11, **caractérisé en ce que** le moyen de focalisation (40, 41, 42, 43) comportant deux lentilles cylindriques, la distance entre les deux lentilles cylindriques est réglable.

14. Dispositif (300, 301, 302, 303) selon l'une des revendications précédentes, **caractérisé en ce qu'**il comprend au moins un canal (CA1, CA2) d'amenée pour un gaz neutre débouchant dans un canal (CA3) additionnel formé, au niveau de la deuxième chambre (2) du réacteur (100), entre le canal (3') de communication entre les deux chambres (1, 2) du réacteur et une cheminée (C) entourant ledit canal (3') de communication entre les deux chambres (1, 2) du réacteur.

15. Dispositif (300, 301, 302, 303) selon la revendication précédente, **caractérisé en ce qu'**il comprend entre ledit au moins un canal (CA1, CA2) d'amenée pour le gaz neutre et ledit canal (CA3) additionnel, une chambre de distribution (CH) dudit gaz neutre située, toujours au niveau de la deuxième chambre (2) du réacteur (100), autour du canal (3') de communication entre les deux chambres (1, 2) du réacteur, cette chambre (CH) de distribution comportant au moins un orifice (OR) agencé pour autoriser le passage du gaz neutre vers ledit canal (CA3) additionnel.

16. Procédé de synthèse de nanoparticules de type cœur-coquille par pyrolyse laser, comprenant les étapes suivantes
(a) injecter un précurseur du cœur dans une première chambre (1) d'un réacteur;
(b) éclairer le précurseur du cœur par un faisceau laser afin de former par pyrolyse le cœur des nanoparticules ;
(c) transporter le cœur des nanoparticules ainsi formé à l'étape (b) dans une deuxième chambre (2) du réacteur communiquant avec la première chambre (1) au moyen d'un canal de communication (3') entre les deux chambres ;
(d) injecter un précurseur de la coquille dans la deuxième chambre (2) du réacteur ;
(e) éclairer le précurseur de la coquille avec un faisceau laser afin de former par pyrolyse la coquille des nanoparticules et d'assurer le dépôt de cette coquille autour du cœur ;
**caractérisé en ce que** l'étape (d) s'effectue par l'intermédiaire d'une chambre (60) de distribution située dans la deuxième chambre (2) et entourant ledit canal de communication (3') entre les deux chambres (1, 2), ladite chambre (60) de distribution étant par ailleurs munie, sur sa périphérie interne, d'au moins une ouverture (E₁, ..., E_{N}) débouchant à l'intérieur dudit canal (3') de communication, de sorte que la vitesse moyenne du précurseur dans ladite au moins une ouverture est comprise entre 0,5 m/s et 20 m/s, de préférence entre 2 m/s et 12 m/s.

17. Procédé selon la revendication précédente, **caractérisé en ce que** ladite chambre (60) de distribution comprend, sur sa périphérie interne, au moins deux ouvertures débouchant à l'intérieur dudit canal (3') de communication entre les deux chambres (1, 2) du réacteur (100).

18. Procédé selon la revendication précédente, **caractérisé en ce que** les ouvertures de la chambre (60) de distribution sont équiréparties sur la périphérie interne de ladite chambre de distribution.

19. Procédé selon l'une des revendications 17 ou 18, **caractérisé en ce que** les ouvertures de la chambre (60) de distribution sont identiques.

20. Procédé selon l'une des revendications 17 à 19, **caractérisé en ce que** la vitesse moyenne du précurseur dans chaque ouverture est comprise entre 0,5 m/s et 20 m/s, de préférence entre 2 m/s et 12 m/s.

## Patentansprüche

1. Vorrichtung (300, 301, 302, 303) zur Synthese von Nanopartikeln vom Typ Kern-Schale durch Laserpyrolyse, umfassend:
- einen Reaktor (100), umfassend:
• eine erste Kammer (1) zur Synthese des Kerns, die mit einem Eingang (11) für einen Vorläufer des Kerns versehen ist;
• eine zweite Kammer (2) zur Synthese der Schale, die mit einem Eingang (21) für einen Vorläufer der Schale versehen ist; und
• mindestens einen Verbindungskanal (3') zwischen den beiden Kammern (1, 2) zum Übertragen des Kerns der Nanopartikel, die dazu bestimmt sind, in der ersten Kammer (1) gebildet zu werden, in Richtung der zweiten Kammer (2);
- eine optische Vorrichtung (200, 201, 202, 203) zum Beleuchten jeder der beiden Kammern (1, 2), wobei diese Vorrichtung mindestens einen Laser (8, 80) umfasst, der geeignet ist, einen Laserstrahl (10, 101) zu emittieren, der dazu bestimmt ist, mit den Vorläufern zu wechselwirken, um den Kern und die Schale zu bilden;
**dadurch gekennzeichnet, dass** sie mindestens einen Versorgungskanal (6', 6") des Vorläufers der Schale umfasst, dessen eines Ende in Form einer Verteilerkammer (60) vorliegt, die sich in der zweiten Kammer (2) befindet und den Verbindungskanal (3') zwischen den beiden Kammern (1, 2) des Reaktors (100) umgibt, wobei die Verteilerkammer (60) ferner an ihrem inneren Umfang (PI) mit mindestens einer Öffnung (E₁, ..., E_{N}) versehen ist, die im Inneren des Verbindungskanals (3') mündet.

2. Vorrichtung (300, 301, 302, 303) nach Anspruch 1, **dadurch gekennzeichnet, dass** die Verteilerkammer (60) an ihrem inneren Umfang (PI) mindestens zwei Öffnungen (E₁, ..., E₁₆) umfasst, die im Inneren des Verbindungskanals (3') zwischen den beiden Kammern (1, 2) des Reaktors (100) münden.

3. Vorrichtung (300, 301, 302, 303) nach einem der vorstehenden Ansprüche, **dadurch gekennzeichnet, dass** die Verteilerkammer (60) an ihrem inneren Umfang (PI) zwischen zwei und sechzehn Öffnungen (E₁, ..., E₁₆) umfasst, die im Inneren des Verbindungskanals (3') zwischen den beiden Kammern (1, 2) des Reaktors (100) münden.

4. Vorrichtung (300, 301, 302, 303) nach einem der Ansprüche 2 oder 3, **dadurch gekennzeichnet, dass** die Öffnungen (E₁, ..., E_{N}) der Verteilerkammer (60) gleichmäßig an dem inneren Umfang (PI) der Verteilerkammer verteilt sind.

5. Vorrichtung (300, 301, 302, 303) nach einem der Ansprüche 2 bis 4, **dadurch gekennzeichnet, dass** die Öffnungen (E₁, ..., E_{N}) der Verteilerkammer (60) identisch sind.

6. Vorrichtung (300, 301, 302, 303) nach einem der vorstehenden Ansprüche, **dadurch gekennzeichnet, dass** die oder jede Öffnung (E₁, ..., E_{N}) der Verteilerkammer (60) eine größere Abmessung zwischen 0,1 mm und 5 mm, vorzugsweise zwischen 0,5 mm und 3 mm, aufweist.

7. Vorrichtung (300, 301, 302, 303) nach einem der vorstehenden Ansprüche, **dadurch gekennzeichnet, dass** die optische Vorrichtung (200, 201, 202, 203) eine Vielzahl von Spiegeln (30, 31, 32, 33) umfasst, die so angeordnet sind, dass der von dem Laser (8) emittierte Laserstrahl geeignet ist, die beiden Kammern (1, 2) des Reaktors (100) nacheinander zu beleuchten.

8. Vorrichtung (300, 301, 302, 303) nach dem vorstehenden Anspruch, **dadurch gekennzeichnet, dass** die optische Vorrichtung (200, 201, 202, 203) mindestens eine Trennklinge (50) zum Einstellen der Leistung des Laserstrahls in jeder der zwei Kammern (1, 2) des Reaktors (100) umfasst, wobei sich diese Trennklinge beispielsweise zwischen zwei Spiegeln (30, 31) befindet.

9. Vorrichtung (300, 301, 302, 303) nach einem der Ansprüche 1 bis 5, **dadurch gekennzeichnet, dass** die optische Vorrichtung (200, 201, 202, 203) eine Trennklinge (51) und mindestens einen Spiegel (33) umfasst, die so angeordnet sind, dass der von dem Laser emittierte Laserstrahl (10) in zwei Strahlen (111, 112) unterteilt ist, die jeweils geeignet sind, eine der beiden Kammern (1, 2) des Reaktors (100) zu beleuchten.

10. Vorrichtung (300, 301, 302, 303) nach einem der Ansprüche 1 bis 6, **dadurch gekennzeichnet, dass** die optische Vorrichtung (200, 201, 202, 203) einen ersten Laser (8) zum Beleuchten der ersten Kammer (1) des Reaktors (100) und einen zweiten Laser (80) zum Beleuchten der zweiten Kammer (2) des Reaktors (100) umfasst.

11. Vorrichtung (300, 301, 302, 303) nach einem der vorstehenden Ansprüche, **dadurch gekennzeichnet, dass** die optische Vorrichtung (200, 201, 202, 203) mindestens ein Fokussiermittel (40, 41, 42, 43) umfasst, das zwischen dem oder jedem Laser (8, 80) und mindestens einer der beiden Kammern (1, 2) des Reaktors (100) angeordnet ist.

12. Vorrichtung (300, 301, 302, 303) nach dem vorstehenden Anspruch, **dadurch gekennzeichnet, dass** der Abstand zwischen dem mindestens einen Fokussiermittel (40, 41, 42, 43) und der benachbarten Kammer (1, 2) des Reaktors (100) einstellbar ist.

13. Vorrichtung (300, 301, 302, 303) nach einem der Ansprüche 10 oder 11, **dadurch gekennzeichnet, dass** das Fokussiermittel (40, 41, 42, 43) zwei zylindrische Linsen umfasst, wobei der Abstand zwischen den beiden zylindrischen Linsen einstellbar ist.

14. Vorrichtung (300, 301, 302, 303) nach einem der vorstehenden Ansprüche, **dadurch gekennzeichnet, dass** sie mindestens einen Zufuhrkanal (CA1, CA2) für ein neutrales Gas umfasst, der in einem zusätzlichen Kanal (CA3) mündet, der bei der zweiten Kammer (2) des Reaktors (100) zwischen dem Verbindungskanal (3') zwischen den beiden Kammern (1, 2) des Reaktors und einem Abzug (C), der den Verbindungskanal (3') umgibt, zwischen den beiden Kammern (1, 2) des Reaktors ausgebildet ist.

15. Vorrichtung (300, 301, 302, 303) nach dem vorstehenden Anspruch, **dadurch gekennzeichnet, dass** sie zwischen dem mindestens einen Zufuhrkanal (CA1, CA2) für das neutrale Gas und dem zusätzlichen Kanal (CA3) eine Verteilerkammer (CH) des neutralen Gases umfasst, die sich immer bei der zweiten Kammer (2) des Reaktors (100) um den Verbindungskanal (3') zwischen den beiden Kammern (1, 2) des Reaktors befindet, wobei diese Verteilerkammer (CH) mindestens eine Öffnung (OR) umfasst, die angeordnet ist, um den Durchgang des neutralen Gases zu dem zusätzlichen Kanal (CA3) zu ermöglichen.

16. Verfahren zur Synthese von Nanopartikeln vom Typ Kern-Schale durch Laserpyrolyse, umfassend die folgenden Schritte
(a) Injizieren eines Vorläufers des Kerns in eine erste Kammer (1) eines Reaktors;
(b) Beleuchten des Vorläufers des Kerns durch einen Laserstrahl, um den Kern der Nanopartikel durch Pyrolyse zu bilden;
(c) Transportieren des Kerns der in Schritt (b) so gebildeten Nanopartikel in eine zweite Kammer (2) des Reaktors, die mit der ersten Kammer (1) über einen Verbindungskanal (3') zwischen den beiden Kammern in Verbindung steht;
(d) Injizieren eines Vorläufers der Schale in die zweite Kammer (2) des Reaktors;
(e) Beleuchten des Vorläufers der Schale mit einem Laserstrahl, um durch Pyrolyse die Schale der Nanopartikel zu bilden und die Ablagerung dieser Schale um den Kern sicherzustellen;
**dadurch gekennzeichnet, dass** Schritt (d) mittels einer Verteilerkammer (60) ausgeführt wird, die sich in der zweiten Kammer (2) befindet und den Verbindungskanal (3') zwischen den beiden Kammern (1, 2) umgibt, wobei die Verteilerkammer (60) ferner an ihrem inneren Umfang mit mindestens einer Öffnung (E₁, ..., E_{N}) versehen ist, die im Inneren des Verbindungskanals (3') mündet, so dass die durchschnittliche Geschwindigkeit des Vorläufers in der mindestens einen Öffnung zwischen 0,5 m/s und 20 m/s, vorzugsweise zwischen 2 m/s und 12 m/s, beträgt.

17. Verfahren nach dem vorstehenden Anspruch, **dadurch gekennzeichnet, dass** die Verteilerkammer (60) an ihrem inneren Umfang mindestens zwei Öffnungen umfasst, die im Inneren des Verbindungskanals (3') zwischen den beiden Kammern (1, 2) des Reaktors (100) münden.

18. Verfahren nach dem vorstehenden Anspruch, **dadurch gekennzeichnet, dass** die Öffnungen der Verteilerkammer (60) gleichmäßig an dem inneren Umfang der Verteilerkammer verteilt sind.

19. Verfahren nach einem der Ansprüche 17 oder 18, **dadurch gekennzeichnet, dass** die Öffnungen der Verteilerkammer (60) identisch sind.

20. Verfahren nach einem der Ansprüche 17 bis 19, **dadurch gekennzeichnet, dass** die durchschnittliche Geschwindigkeit des Vorläufers in jeder Öffnung zwischen 0,5 m/s und 20 m/s, vorzugsweise zwischen 2 m/s und 12 m/s, beträgt.

## Claims

1. Device (300, 301, 302, 303) for synthesising core-shell nanoparticles by laser pyrolysis, comprising:
- a reactor (100) comprising:
• a first chamber (1) for the synthesis of the core, provided with an inlet (11) for a core precursor;
• a second chamber (2) for the synthesis of the shell, provided with an inlet (21) for a shell precursor; and
• at least one communication channel (3') between the two chambers (1, 2) to transmit the cores of the nanoparticles intended to be formed from the first chamber (1) towards the second chamber (2);
- an optical device (200, 201, 202, 203) to illuminate each of the two chambers (1, 2), the device comprising at least one laser (8, 80) capable of emitting a laser beam (10, 101) intended to interact with said precursors to form the core and the shell;
**characterised in that** it comprises at least a first shell precursor inlet channel (6', 6"), one end of which is in the form of a distribution chamber (60) located in the second chamber (2) and surrounding the communication channel (3') between the two chambers (1, 2) of the reactor (100), said distribution chamber (60) being further provided, on its inner periphery (PI), with at least one opening (E₁, ..., E_{N}) leading inside said communication channel (3').

2. Device (300, 301, 302, 303) according to claim 1, **characterised in that** said distribution chamber (60) comprises, on its inner periphery (PI), at least two openings (E₁, ..., E₁₆) that lead inside said communication channel (3') between the two chambers (1, 2) of the reactor (100).

3. Device (300, 301, 302, 303) according to one of the preceding claims, **characterised in that** said distribution chamber (60) comprises, on its inner periphery (PI), between two and sixteen openings (E₁, ..., E₁₆) that lead inside said communication channel (3') between the two chambers (1, 2) of the reactor (100).

4. Device (300, 301, 302, 303) according to one of claims 2 or 3, **characterised in that** the openings (E₁, ..., E_{N}) of the distribution chamber (60) are evenly distributed around the inner periphery (PI) of said distribution chamber.

5. Device (300, 301, 302, 303) according to one of claims 2 to 4, **characterised in that** the openings (E₁, ..., E_{N}) of the distribution chamber (60) are identical.

6. Device (300, 301, 302, 303) according to one of the preceding claims, **characterised in that** the or each opening (E₁, ..., E_{N}) of the distribution chamber (60) has a greater dimension ranging from 0.1mm to 5mm, preferably from 0.5mm to 3mm.

7. Device (300, 301, 302, 303) according to one of the preceding claims, **characterised in that** the optical device (200, 201, 202, 203) comprises a plurality of mirrors (30, 31, 32, 33) arranged so that the laser beam (8) is capable of illuminating in succession the two chambers (1, 2) of the reactor (100).

8. Device (300, 301, 302, 303) according to the preceding claim, **characterised in that** the optical device (200, 201, 202, 203) comprises at least one beam splitter (50) to adjust the power of the laser beam in each of the two chambers (1, 2) of the reactor (100), said beam splitter being for example located between two mirrors (30, 31).

9. Device (300, 301, 302, 303) according to one of claims 1 to 5, **characterised in that** the optical device (200, 201, 202, 203) comprises a beam splitter (51) and at least one mirror (33) arranged so that the laser beam (10) emitted by the laser is divided into two beams (111, 112), each capable of illuminating one of the two chambers (1, 2) of the reactor (100).

10. Device (300, 301, 302, 303) according to one of the claims 1 to 6, **characterised in that** the optical device (200, 201, 202, 203) comprises a first laser (8) to illuminate the first chamber (1) of the reactor (100) and a second laser (80) to illuminate the second chamber (2) of the reactor (100).

11. Device (300, 301, 302, 303) according to one of the preceding claims, **characterised in that** the optical device (200, 201, 202, 203) comprises at least one focusing means (40, 41, 42, 43) arranged between the or each laser (8, 80) and at least one of the two chambers (1, 2) of the reactor (100).

12. Device (300, 301, 302, 303) according to the preceding claim, **characterised in that** the distance between said at least one focusing means (40, 41, 42, 43) and the adjacent chamber (1, 2) of the reactor (100) is adjustable.

13. Device (300, 301, 302, 303) according to one of the claims 10 or 11, **characterised in that** the focusing means (40, 41, 42, 43) comprising two cylindrical lenses, the distance between the two cylindrical lenses is adjustable.

14. Device (300, 301, 302, 303) according to one of the preceding claims, **characterised in that** it comprises at least one outlet channel (CA1, CA2) for a neutral gas leading to an additional channel (CA3) formed, at the level of the second chamber (2) of the reactor (100), between the communication channel (3') between the two chambers (1, 2) of the reactor and a chimney (C) surrounding said communication channel (3') between the two chambers (1, 2) of the reactor.

15. Device (300, 301, 302, 303) according to the preceding claim, **characterised in that** it comprises between said at least one inlet channel (CA1, CA2) for the neutral gas and said additional channel (CA3), a distribution chamber (CH) of said gas, located, at the level of the second chamber (2) of the reactor (100), around the communication channel (3') between the two chambers (1, 2) of the reactor, this distribution chamber (CH) comprising at least one orifice (OR) arranged to authorise the passage of the neutral gas towards said additional channel (CA3).

16. Method for synthesising core-shell nanoparticles by laser pyrolysis, comprising the following steps
(a) injecting a core precursor into the first chamber (1) of a reactor;
(b) illuminating the core precursor with a laser beam in order to form, by pyrolysis, the core of the nanoparticles;
(c) transporting the core of the nanoparticles thus formed in step (b) into a second reactor chamber (2) communicating with the first chamber (1) by means of a communication channel (3') between the two chambers;
(d) injecting a shell precursor in the second chamber (2) of the reactor;
(e) illuminating the shell precursor with a laser beam in order to form, by pyrolysis, the shell of the nanoparticles and to ensure the deposition of the shell around the core;
**characterised in that** step (d) is performed by means of a distribution chamber (60) located in the second chamber (2) and surrounding said communication channel (3') between the two chambers (1, 2), said distribution chamber (60) further being provided, on its inner periphery, with at least one opening (E₁, ..., E_{N}) leading inside said communication channel (3'), so that the average speed of the precursor in said at least one opening ranges from 0.5m/s to 20m/s, preferably from 2m/s to 12m/s.

17. Method according to the preceding claim, **characterised in that** said distribution chamber (60) comprises, on its inner periphery, at least two openings that lead inside said communication channel (3') between the two chambers (1, 2) of the reactor (100).

18. Method according to the preceding claim, **characterised in that** the openings of the distribution chamber (60) are evenly distributed around the inner periphery of said distribution chamber.

19. Method according to one of claims 17 or 18, **characterised in that** the openings of the distribution chamber (60) are identical.

20. Method according to one of claims 17 to 19, **characterised in that** the average speed of the precursor in each opening ranges from 0.5m/s to 20m/s, preferably from 2m/s to 12m/s.
